(19) Europäisches Patentamt
European Patent Office
Office européen des brevets

(11) Veröffentlichungsnummer: **0 010 687**
**B1**

# (12) EUROPÄISCHE PATENTSCHRIFT

(45) Veröffentlichungstag der Patentschrift: **28.07.82**

(51) Int. Cl.³: **C 08 G 18/08**, C 08 K 5/16, C 08 J 5/18

(21) Anmeldenummer: **79104003.3**

(22) Anmeldetag: **17.10.79**

(54) **Verfahren zur Herstellung von Polyurethankunststoffen aus Toluylendiisocyanat-Rückständen und deren Verwendung zur Herstellung von Platten und Formteilen.**

(30) Priorität: **27.10.78 DE 2846809**

(43) Veröffentlichungstag der Anmeldung: **14.05.80 Patentblatt 80/10**

(45) Bekanntmachung des Hinweises auf die Patenterteilung: **28.07.82 Patentblatt 82/30**

(84) Benannte Vertragsstaaten: **BE DE FR GB IT NL**

(56) Entgegenhaltungen:
**AT-B-312 302**
**DE-A-2 333 150**

(73) Patentinhaber: **BAYER AG, Zentralbereich Patente, Marken und Lizenzen, D-5090 Leverkusen 1, Bayerwerk (DE)**

(72) Erfinder: **Reischl, Artur, Dr., H.T.von Böttingerstrasse 19, D-5090 Leverkusen 1 (DE)**

EP 0 010 687 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

# Verfahren zur Herstellung von Polyurethankunststoffen aus Toluylendiisocyanat-Rückständen und deren Verwendung zur Herstellung von Platten und Formteilen

Die vorliegende Erfindung betrifft ein Verfahren zur Herstellung von gegebenenfalls zellförmigen Polyurethankunststoffen unter Mitverwendung eines reaktiven Füllstoffs, welcher durch feines Vermahlen eines Destillationsrückstands erhalten wurde, wie er bei der grosstechnischen Herstellung von Toluylendiisocyanat anfällt. Es gelingt auf diese Weise, ein Recycling der bisher unverwertbaren, schlackenartigen Rückstände zu erreichen, und dabei die mechanischen Eigenschaften der mit ihnen gefüllten Polyurethankunststoffe in vieler Hinsicht zu verbessern.

Bei der grosstechnischen Produktion von Isocyanaten entstehen zwangsläufig immer erhebliche Mengen an höhermolekularen vernetzten Neben- und Folgeprodukten. Diese fallen während der destillativen Aufarbeitung der durch Phosgenierung von Aminen erhaltenen rohen Isocyanatmischungen als teerartiger, nichtdestillierbarer Rückstand an. Diese Rückstände sind als solche für die üblichen Anwendungszwecke von Polyisocyanaten (Herstellung von Polyurethankunststoffen) ungeeignet. Um einen totalen Verlust des nichtdestillierbaren Rückstands zu vermeiden, kann man sich jedoch in manchen Fällen, beispielsweise bei der Phosgenierung von Diaminen der Diphenylmethanreihe, so behelfen, dass man nur einen Teil des reinen monomeren Isocyanats aus dem rohen Phosgenierungsprodukt isoliert, d.h. einen beträchtlichen Anteil an monomorem Isocyanat in der Sumpfphase belässt, um die höhermolekularen Nebenprodukte in Lösung zu halten. Für das so erhaltene, flüssige, an höhermolekularen Produkten angereicherte Polyisocyanatgemisch (sogenanntes «rohes MDI») konnte im Laufe der letzten Jahre eine Reihe von Anwendungsmöglichkeiten für die Herstellung spezieller Polyurethankunststoffe gefunden werden.

Bisher scheiterten jedoch alle Versuche, in analoger Weise an höhermolekularen Folgeprodukten angereichertes Toluylendiisocyanat («rohes TDI») mit einem ökonomisch noch vertretbar niedrigen Anteil an monomerem Toluylendiisocyanat anzuwenden. Unter den technisch realisierbaren Bedingungen fallen bei der Destillation des Phosgenierungsprodukts von Toluylendiaminen immer höhermolekulare, unlösliche Folgeprodukte mit Uretdion-, Isocyanurat-, Carbodiimid-, Uretonimin-, Harnstoff- und Biuretgruppen an. Je nach Gehalt des Ausgangsprodukts an o-Toluylendiamin entstehen bei der Phosgenierung ausserdem Methyl-benzimidazolone, die im Laufe der Zeit mit den vorhandenen freien Isocyanatgruppen unter Molekülvergrösserung zu unlöslichen, vernetzten Produkten biuretisiert werden. Rohe TDI-Destillationsrückstände, die noch einen sehr hohen Monomergehalt aufweisen (möglichst über 80 Gew.-%) und praktisch kein Methyl-benzimidazolon oder dessen Derivate enthalten, sind zwar löslich bzw. flüssig, aber nicht ausreichend lagerstabil; der Gehalt an freien NCO-Gruppen nimmt auch bei Raumtemperatur während der Lagerung unter Viskositätserhöhung laufend ab.

Aus US-A-3 634 361, DE-A-2 123 183, DE-A-2 333 150, US-A-3 634 361 und DE-A-2 423 594 sind verschiedene Verfahren bekannt geworden, TDI-Destillationsrückstände, die noch einen beträchtlichen Gehalt an freien NCO-Gruppen (vorzugsweise mehr als 20 Gew.-%) aufweisen, in Anwesenheit von monomeren Diisocyanaten in einem organischen Lösungsmittel, gegebenenfalls bei hohen Temperaturen, zu lösen und diese Rückstandslösungen als Isocyanatkomponente im Polyisocyanat-Polyadditionsverfahren einzusetzen. In der Praxis scheiterte jedoch eine derartige Verwertung der TDI-Rückstände an der mangelnden Lagerstabilität und Standardisierbarkeit der Lösungen, falls eine Auflösung überhaupt möglich war, oder an der Sedimentation unlöslicher Bestandteile.

Eine partielle Rückstandsverwertung gelang in den letzten Jahren durch alkalische Hydrolyse der TDI-Destillationsrückstände. Es wird dabei allerdings nur ein relativ kleiner Anteil an Toluylendiaminen zurückgewonnen. Mehr Erfolg, die TDI-Ausbeute zu maximieren, brachten die inzwischen in grossem Umfang bei der technischen Produktion von 2,4-Toluylendiisocyanat und 2,4-/2,6-Toluylendiisocyanatgemischen angewandten sogenannten Fallrohrverdampfer (DE-A-2 035 731) bzw. die kontinuierliche Thermolyse des noch flüssigen TDI-Rückstandsteeres. Dabei fallen nur noch etwa 10 Gew.-% (bezogen auf rohes TDI) eines praktisch monomerenfreien, jedoch noch freie Isocyanatgruppen enthaltenden Rückstands an, der zwecks Vermeidung von leicht auftretenden Schwelbränden und auch aus physiologischen Gründen unmittelbar im Anschluss an die Abtrennung des reinen, monomeren TDI in hoch erhitztem Zustand (bei ca. 150 bis 300 °C) als teerartige Masse in Wasser eingerührt wird. Bei diesem Denaturierungsprozess reagieren die noch vorhandenen freien Isocyanatgruppen zu einem erheblichen Teil mit dem Wasser unter Kohlendioxidentwicklung und Ausbildung von zusätzlichen Polyharnstoffgruppen, so dass nur noch ein sehr geringer Rest (meist ca. 1 bis 10 Gew.-%) an inkludierten Isocyanatgruppen übrig bleibt. Beim Lagern in Wasser oder in feuchtem Zustand nimmt der Isocyanatgehalt über längere Zeit allmählich weiter ab. Die so erhaltenen, schlackenartigen, Harnstoffgruppen aufweisenden TDI-Rückstände sind in allen gebräuchlichen Lösungsmitteln unlöslich. Oberhalb ca. 230 °C beginnen sie teilweise zu schmelzen, wobei Zersetzung und Gasentwicklung auftritt.

Eine technisch und ökonomisch interessante Verwertungsmöglichkeit für diese TDI-Rückstandsschlacken wurde bisher nicht gefunden. Der weitaus grösste Teil der bei der TDI-Produktion weltweit in riesigen Mengen zwangsweise

anfallenden Destillationsrückstände wird daher auf Deponien abgelagert oder mit erheblichen Problemen in Heizwerken verbrannt. Bei der Verbrennung der TDI-Rückstandsschlacken bilden sich am Boden des Verbrennungsraums Ablagerungen von fest haftenden, schwer entflammbaren Teermassen, die sich in vielen Fällen oberhalb ca. 500 °C explosionsartig zersetzen.

Es war deshalb Aufgabe der vorliegenden Erfindung, für die TDI-Destillationsrückstände, insbesondere für die mit Hilfe von Wasser denaturierten TDI-Rückstandsschlacken, die in der weitaus grössten Menge bei der Produktion von Toluylendiisocyanat im 2,4-/2,6-Isomerenverhältnis 80:20 anfallen und sogar bei Temperaturen über 280 °C nicht schmelzen, technisch brauchbare Verwertungsmöglichkeiten im Sinne eines Recycling anzugeben. Überraschenderweise wurde nun gefunden, dass sich TDI-Destillationsrückstände durch sehr feines Vermahlen und gegebenenfalls anschliessende einfache chemische Modifizierungsreaktionen in heterodisperser Phase in hochwertige reaktive Füllstoffe überführen lassen, welche bei der Herstellung von Polyurethankunststoffen zwecks Verbesserung von deren mechanischen Eigenschaften mitverwendet werden können.

Gegenstand der Erfindung ist somit ein Verfahren zur Herstellung von gegebenenfalls zellförmigen Polyurethankunststoffen durch Polyaddition von

A) Polyisocyanaten sowie gegebenenfalls

B) niedermolekularen und/oder höhermolekularen Verbindungen mit gegenüber Isocyanaten reaktiven Wasserstoffatomen, in Gegenwart von

C) organischen Füllstoffen sowie gegebenenfalls

D) Treibmitteln, Katalysatoren und weiteren an sich bekannten Zusatzstoffen,

welches dadurch gekennzeichnet ist, dass als Komponente C) ein im wesentlichen monomerenfreier, vernetzter, in inerten organischen Lösungsmitteln unlöslicher, nicht unzersetzt schmelzbarer Destillationsrückstand eingesetzt wird, wie er bei der destillativen Entfernung von monomeren Toluylendiisocyanaten aus den rohen Phosgenierungsprodukten von Toluylendiaminen, gegebenenfalls nach dem Einrühren in Wasser, als Schlacke anfällt, welcher zu einer mittleren Teilchengrösse von weniger als 800 µm, bevorzugt weniger als 350 µm, besonders bevorzugt weniger als 50 µm, insbesondere weniger als 10 µm, zerkleinert ist und welcher gegebenenfalls durch Reaktion mit Carbonylverbindungen und/oder gegenüber Isocyanatgruppen und/oder Carbodiimidgruppen reaktiven Verbindungen chemisch modifiziert wurde.

Für die Durchführung des erfindungsgemässen Verfahrens werden eingesetzt:

1. Als Ausgangskomponenten aliphatische, cycloaliphatische, araliphatische, aromatische und heterocyclische Polyisocyanate, wie sie z.B. von W. Siefken in Justus Liebigs Annalen der Chemie, 562, Seiten 75 bis 136, beschrieben werden, beispielsweise solche der Formel

$$Q\ (NCO)_n$$

in der

n = 2–4, vorzugsweise 2, und

Q einen aliphatischen Kohlenwasserstoffrest mit 2–18, vorzugsweise 6–10 C-Atomen,

einen cycloaliphatischen Kohlenwasserstoffrest mit 4–15, vorzugsweise 5–10 C-Atomen,

einen aromatischen Kohlenwasserstoffrest mit 6–15, vorzugsweise 6–13 C-Atomen,

oder einen araliphatischen Kohlenwasserstoffrest mit 8–15, vorzugsweise 8–13 C-Atomen,

bedeuten, z.B. Äthylen-diisocyanat, 1,4-Tetramethylen-diisocyanat, 1,6-Hexamethylendiisocyanat, 1,12-Dodecandiisocyanat, Cyclobutan-1,3-diisocyanat, Cyclohexan-1,3- und -1,4-diisocyanat sowie beliebige Gemische dieser Isomeren, 1-Isocyanato-3,3,5-trimethyl-5-isocyanatomethyl-cyclohexan (DE-Auslegeschrift 1 202 785, US-Patentschrift 3 401 190), 2,4- und 2,6-Hexahydrotoluylendiisocyanat sowie beliebige Gemische dieser Isomeren, Hexahydro-1,3- und/oder -1,4-phenylendiisocyanat, Perhydro-2,4'- und/oder -4,4'-diphenylmethan-diisocyanat, 1,3- und 1,4-Phenylendiisocyanat, 2,4- und 2,6-Toluylendiisocyanat sowie beliebige Gemische dieser Isomeren, Diphenylmethan-2,4'- und/oder -4,4'-diisocyanat, Naphthylen-1,5-diisocyanat.

Ferner kommen beispielsweise erfindungsgemäss in Frage: Triphenylmethan-4,4',4''-triisocyanat, Polyphenyl-polymethylenpolyisocyanate, wie sie durch Anilin-Formaldehyd-Kondensation und anschliessende Phosgenierung erhalten und z.B. in den GB-Patentschriften 874 430 und 848 671 beschrieben werden, m- und p-Isocyanatophenylsulfonyl-isocyanate gemäss der US-Patentschrift 3 454 606, perchlorierte Arylpolyisocyanate, wie sie z.B. in der DE-Auslegeschrift 1 157 601 (US-Patentschrift 3 277 138) beschrieben werden, Carbodiimidgruppen aufweisende Polyisocyanate, wie sie in der DE-Patentschrift 1 092 007 (US-Patentschrift 3 152 162) sowie in den DE-Offenlegungsschriften 2 504 400, 2 537 685 und 2 552 350 beschrieben werden, Norbornan-Diisocyanate gemäss US-Patentschrift 3 492 330, Allophanatgruppen aufweisende Polyisocyanate, wie sie z.B. in der GB-Patentschrift 994 890, der BE-Patentschrift 761 626 und der NL-Patentanmeldung 7 102 524 beschrieben werden, Isocyanuratgruppen aufweisende Polyisocyanate, wie sie z.B. in der US-Patentschrift 3 001 973, in den DE-Patentschriften 1 022 789, 1 222 067 und 1 027 394 sowie in den DE-Offenlegungsschriften 1 929 034 und 2 004 048 beschrieben werden, Urethangruppen aufweisende Polyisocyanate, wie sie z.B. in der BE-Patentschrift 752 261 oder in den US-Patentschriften 3 394 164 und 3 644 457 beschrieben werden, acylierte Harnstoffgruppen aufweisende Polyisocyanate gemäss der DE-Patentschrift 1 230 778, Biuretgruppen aufweisende

Polyisocyanate, wie sie z.B. in den US-Patentschriften 3 124 605, 3 201 372 und 3 124 605 sowie in der GB-Patentschrift 889 050 beschrieben werden, durch Telomerisationsreaktionen hergestellte Polyisocyanate, wie sie z.B. in der US-Patentschrift 3 654 106 beschrieben werden, Estergruppen aufweisende Polyisocyanate, wie sie z.B. in den GB-Patentschriften 965 474 und 1 072 956, in der US-Patentschrift 3 567 763 und in der DEPatentschrift 1 231 688 genannt werden, Umsetzungsprodukte der obengenannten Isocyanate mit Acetalen gemäss der DE-Patentschrift 1 072 385 und polymere Fettsäureester enthaltende Polyisocyanate gemäss der US-Patentschrift 3 455 883.

. Es ist auch möglich, zusätzlich andere bei der technischen Isocyanatherstellung anfallende, Isocyanatgruppen aufweisende Destillationsrückstände, gegebenenfalls gelöst in einem oder mehreren der vorgenannten Polyisocyanate, einzusetzen. Ferner ist es möglich, beliebige Mischungen der vorgenannten Polyisocyanate zu verwenden.

Besonders bevorzugt werden in der Regel die technisch leicht zugänglichen Polyisocyanate, z.B. das 2,4- und 2,6-Toluylendiisocyanat sowie beliebige Gemische dieser Isomeren («TDI»), Polyphenyl-polymethylen-polyisocyanate, wie sie durch Anilin-Formaldehyd-Kondensation und anschliessende Phosgenierung hergestellt werden («rohes MDI») und Carbodiimidgruppen, Urethangruppen, Allophanatgruppen, Isocyanuratgruppen, Harnstoffgruppen oder Biuretgruppen aufweisenden Polyisocyanate («modifizierte Polyisocyanate»), insbesondere solche modifizierten Polyisocyanate, die sich vom 2,4- und/oder 2,6-Toluylendiisocyanat bzw. vom 4,4'- und/oder 2,4'-Diphenylmethandiisocyanat ableiten.

2. Als Ausgangskomponenten ferner gegebenenfalls Verbindungen mit mindestens zwei gegenüber Isocyanaten reaktionsfähigen Wasserstoffatomen von einem Molekulargewicht in der Regel von 400–10 000. Hierunter versteht man neben Aminogruppen, Thiolgruppen oder Carboxylgruppen aufweisenden Verbindungen vorzugsweise Hydroxylgruppen aufweisende Verbindungen, insbesondere zwei bis acht Hydroxylgruppen aufweisende Verbindungen, speziell solche vom Molekulargewicht 500 bis 7000, vorzugsweise 1000 bis 5000, z.B. mindestens zwei, in der Regel 2 bis 8, vorzugsweise aber 2 bis 4, Hydroxylgruppen aufweisende Polyester, Polyäther, Polythioäther, Polyacetale, Polycarbonate und Polyesteramide, wie sie für die Herstellung von homogenen und von zellförmigen Polyurethanen an sich bekannt sind:

a) Die in Frage kommenden Hydroxylgruppen aufweisenden Polyester sind z.B. Umsetzungsprodukte von mehrwertigen, vorzugsweise zweiwertigen und gegebenenfalls zusätzlich dreiwertigen Alkoholen mit mehrwertigen, vorzugsweise zweiwertigen, Carbonsäuren. Anstelle der freien Polycarbonsäuren können auch die entsprechenden Polycarbonsäureanhydride oder entsprechende Polycarbonsäureester von niedrigen Alkoholen oder deren Gemische zur Herstellung der Polyester verwendet werden. Die Polycarbonsäuren können aliphatischer, cycloaliphatischer, aromatischer und/oder heterocyclischer Natur sein und gegebenenfalls, z.B. durch Halogenatome, substituiert und/oder ungesättigt sein.

Als Beispiele für solche Carbonsäuren und deren Derivate seien genannt:

Bernsteinsäure, Adipinsäure, Korksäure, Azelainsäure, Sebacinsäure, Phthalsäure, Isophthalsäure, Trimellitsäure, Phthalsäureanhydrid, Tetrahydrophthalsäureanhydrid, Hexahydrophthalsäureanhydrid, Tetrachlorphthalsäureanhydrid, Endomethylentetrahydrophthalsäureanhydrid, Glutarsäureanhydrid, Maleinsäure, Maleinsäureanhydrid, Fumarsäure, dimerisierte und trimerisierte ungesättigte Fettsäuren, gegebenenfalls in Mischung mit monomeren ungesättigten Fettsäuren, wie Ölsäure; Terephthalsäuredimethylester und Terephthalsäure-bisglykolester. Als mehrwertige Alkohole kommen z.B. Äthylenglykol, Propylenglykol-(1,2) und -(1,3), Butylenglykol-(1,4) und -(2,3), Hexandiol-(1,6), Octandiol-(1,8), Neopentylglykol, 1,4-Bis-hydroxymethylcyclohexan, 2-Methyl-1,3-propandiol, Glycerin, Trimethylolpropan, Hexantriol-(1,2,6), Butantriol-(1,2,4), Trimethyloläthan, Pentaerythrit, Chinit, Mannit und Sorbit, Formit, Methylglykosid, ferner Diäthylenglykol, Triäthylenglykol , Tetraäthylenglykol und höhere Polyäthylenglykole, Dipropylenglykol und höhere Polypropylenglykole sowie Dibutylenglykol und höhere Polybutylenglykole in Frage. Die Polyester können anteilig endständige Carboxylgruppen aufweisen. Auch Polyester aus Lactonen, z.B. ε-Caprolacton, oder aus Hydroxycarbonsäuren, z.B. ω-Hydroxycapronsäure, sind einsetzbar. Ebenso kann erfindungsgemäss auch Rizinusöl als Polyolkomponente eingesetzt werden. Kombinationen aus TDI-Rückstandspulver und Rizinusöl sind insbesondere zur Herstellung von Polyurethan-Reaktivklebstoffen und Fugenvergussmassen geeignet.

b) Auch die erfindungsgemäss in Frage kommenden, mindestens zwei, in der Regel zwei bis acht, vorzugsweise zwei bis drei, Hydroxylgruppen aufweisenden Polyäther sind solche der an sich bekannten Art und werden z.B. durch Polymerisation von Epoxiden wie Äthylenoxid, Propylenoxid, Butylenoxid, Tetrahydrofuran, Styroloxid oder Epichlorhydrin mit sich selbst, z.B. in Gegenwart von Lewis-Katalysatoren wie $BF_3$, oder durch Anlagerung dieser Epoxide, vorzugsweise von Äthylenoxid und Propylenoxid, gegebenenfalls im Gemisch oder nacheinander, an Startkomponenten mit reaktionsfähigen Wasserstoffatomen wie Wasser, Alkohole, Ammoniak oder Amine, z.B. Äthylenglykol, Propylenglykol-(1,3) oder -(1,2)-Trimethylolpropan, Glycerin, Sorbit, 4,4'-Dihydroxy-diphenylpropan, Anilin, Äthanolamin oder Äthylendiamin hergestellt. Auch Sucrosepolyäther, wie sie z.B. in den DE-Auslegeschriften 1 176 358 und 1 064 938 beschrieben werden, sowie auf Formit oder Formose gestartete Polyäther (DE-Offenlegungsschriften 2 639 083 bzw. 2 737 951), kommen erfindungsgemäss in Frage. Vielfach sind solche Polyäther bevorzugt, die überwiegend (bis zu 90 Gew.-%, bezogen auf alle

vorhandenen OH-Gruppen im Polyäther) primäre OH-Gruppen aufweisen. Auch OH-Gruppen aufweisende Polybutadiene sind erfindungsgemäss geeignet.

c) Unter den Polythioäthern seien insbesondere die Kondensationsprodukte von Thiodiglykol mit sich selbst und/oder mit anderen Glykolen, Dicarbonsäuren, Formaldehyd, Aminocarbonsäuren oder Aminoalkoholen angeführt. Je nach den Co-Komponenten handelt es sich bei den Produkten z.B. um Polythiomischäther, Polythioätherester oder Polythioätheresteramide.

d) Als Polyacetale kommen z.B. die aus Glykolen, wie Diäthylenglykol, Triäthylenglykol, 4,4'-Dioxäthoxydiphenyldimethylmethan, Hexandiol und Formaldehyd herstellbaren Verbindungen in Frage. Auch durch Polymerisation cyclischer Acetale wie z.B. Trioxan (DE-Offenlegungsschrift 1 694 128) lassen sich erfindungsgemäss geeignete Polyacetale herstellen.

e) Als Hydroxylgruppen aufweisende Polycarbonate kommen solche der an sich bekannten Art in Betracht, die z.B. durch Umsetzung von Diolen wie Propandiol-(1,3), Butandiol-(1,4) und/oder Hexandiol-(1,6)-, Diäthylenglykol, Triäthylenglykol, Tetraäthylenglykol oder Thiodiglykol mit Diarylcarbonaten, z.B. Diphenylcarbonat, oder Phosgen hergestellt werden können (DE-Auslegeschriften 1 694 080, 1 915 908 und 2 221 751; DE-Offenlegungsschrift 2 605 024).

f) Zu den Polyesteramiden und Polyamiden zählen z.B. die aus mehrwertigen gesättigten oder ungesättigten Carbonsäuren bzw. deren Anhydriden und mehrwertigen gesättigten oder ungesättigten Aminoalkoholen, Diaminen, Polyaminen und deren Mischungen gewonnenen, vorwiegend linearen Kondensate.

g) Auch bereits Urethan-oder Harnstoffgruppen enthaltende Polyhydroxylverbindungen sowie gegebenenfalls modifizierte natürliche Polyole, wie Rizinusöl oder Kohlenhydrate, z.B. Stärke, sind verwendbar. Auch Anlagerungsprodukte von Alkylenoxiden an Phenol-Formaldehyd-Harze oder auch an Harnstoff-Formaldehydharze sind erfindungsgemäss einsetzbar.

h) Die genannten Polyhydroxylverbindungen können vor ihrer Verwendung im Polyisocyanat-Polyadditionsverfahren noch in der verschiedensten Weise modifiziert werden: So lässt sich gemäss DE-Offenlegungsschriften 2 210 839 (US-Patentschrift 3 849 515) und 2 544 195 ein Gemisch aus verschiedenen Polyhydroxylverbindungen (z.B. aus einem Polyäther- und einem Polyesterpolyol) durch Verätherung in Gegenwart einer starken Säure zu einem höhermolekularen Polyol kondensieren, welches aus über Ätherbrücken verbundenen verschiedenen Segmenten aufgebaut ist. Es ist auch möglich, z.B. gemäss DE-Offenlegungsschrift 2 559 372 in die Polyhydroxylverbindungen Amidgruppen oder gemäss DE-Offenlegungsschrift 2 620 487 durch Umsetzung mit polyfunktionellen Cyansäureestern Triazingruppen einzuführen. Durch Umsetzung eines Polyols mit einer weniger als äquivalenten Menge eines Diisocyanatocarbodiimids und anschliessende Reaktion der Carbodiimidgruppe mit einem Amin, Amid, Phosphit oder einer Carbonsäure erhält man Guanidin-, Phosphonoformamidin- bzw. Acylharnstoffgruppen aufweisende Polyhydroxylverbindungen (DE-Offenlegungsschriften 2 714 289, 2 714 292 und 2 714 293). Von besonderem Interesse ist es in manchen Fällen, die höhermolekularen Polyhydroxylverbindungen durch Reaktion mit Isatosäureanhydrid vollständig oder teilweise in die entsprechenden Anthranilsäureester überzuführen, wie es in den DE-Offenlegungsschriften 2 019 432 und 2 619 840 bzw. den US-Patentschriften 3 808 250, 3 975 428 und 4 016 143 beschrieben ist. Man erhält auf diese Weise höhermolekulare Verbindungen mit endständigen aromatischen Aminogruppen.

Durch Umsetzung von NCO-Präpolymeren mit Hydroxylgruppen aufweisenden Enaminen, Aldiminen oder Ketiminen und anschliessende Hydrolyse erhält man gemäss DE-Offenlegungsschrift 2 546 536 bzw. US-Patentschrift 3 865 791 höhermolekulare, endständige Aminogruppen aufweisende Verbindungen. Weitere Herstellungsverfahren für höhermolekulare Verbindungen mit endständigen Aminogruppen oder Hydrazidgruppen werden in der DE-Offenlegungsschrift 1 694 152 (US-Patentschrift 3 625 871) beschrieben.

i) Erfindungsgemäss können gegebenenfalls auch Polyhydroxylverbindungen eingesetzt werden, in welchen hochmolekulare Polyaddukte bzw. Polykondensate oder Polymerisate in feindisperser oder gelöster Form enthalten sind. Derartige Polyhydroxylverbindungen werden z.B. erhalten, wenn man Polyadditionsreaktionen (z.B. Umsetzungen zwischen Polyisocyanaten und aminofunktionellen Verbindungen) bzw. Polykondensationsreaktionen (z.B. zwischen Formaldehyd und Phenolen und/oder Aminen) in situ in den oben genannten, Hydroxylgruppen aufweisenden Verbindungen ablaufen lässt. Derartige Verfahren sind beispielsweise in den DE-Auslegeschriften 1 168 075 und 1 260 142, sowie den DE-Offenlegungsschriften 2 324 134, 2 423 984, 2 512 385, 2 513 815, 2 550 796, 2 550 797, 2 550 833, 2 550 862, 2 633 293 und 2 639 254 beschrieben. Es ist aber auch möglich, gemäss US-Patentschrift 3 869 413 bzw. DE-Offenlegungsschrift 2 550 860 eine fertige wässrige Polymerdispersion mit einer Polyhydroxylverbindung zu vermischen und anschliessend aus dem Gemisch das Wasser zu entfernen.

Auch durch Vinylpolymerisate modifizierte Polyhydroxylverbindungen, wie sie z.B. durch Polymerisation von Styrol und Acrylnitril in Gegenwart von Polyäthern (US-Patentschriften 3 383 351, 3 304 273, 3 523 093, 3 110 695; DE-Auslegeschrift 1 152 536) oder Polycarbonatpolyolen (DE-Patentschrift 1 769 795; US-Patentschrift 3 637 909) erhalten werden, sind für das erfindungsgemässe Verfahren geeignet. Bei Verwendung von Polyätherpolyolen, welche gemäss den DE-Offenlegungsschriften 2 442 101, 2 644 922 und 2 646 141 durch Pfropfpolymerisation mit Vinylphosphonsäureestern sowie gegebenenfalls (Meth)acrylnitril, (Meth)acrylamid oder OH-funktionellen (Meth)acrylsäureestern modifiziert wurden, erhält man Kunststoffe von besonderer Flammwidrigkeit. Polyhydroxylverbindungen, in welche durch radikalische Pfropfpolymerisation mittels ungesättigter Carbonsäuren sowie gegebenenfalls weiterer olefinisch ungesättigter Monomerer Carboxylgruppen eingeführt wurden (DE-Offenlegungsschriften 2 714 291, 2 739 620 und 2 654 746) können mit besonderem Vorteil in Kombination mit mineralischen Füllstoffen eingesetzt werden.

Bei der Verwendung von modifizierten Polyhydroxylverbindungen der obengenannten Art als Ausgangskomponente im Polyisocyanat-Polyadditionsverfahren entstehen in vielen Fällen Polyurethankunststoffe mit wesentlich verbesserten mechanischen Eigenschaften.

Vertreter der genannten erfindungsgemäss zu verwendenden Verbindungen sind z.B. in High Polymers, Vol. XVI, «Polyurethanes, Chemistry and Technology», verfasst von Saunders-Frisch, Interscience Publishers, New York, London, Band I, 1962, Seiten 32–42 und Seiten 44–54 und Band II, 1964, Seiten 5–6 und 198–199, sowie im Kunststoff-Handbuch, Band VII, Vieweg-Höchtlen, Carl-Hanser-Verlag, München, 1966, z.B. auf den Seiten 45–71, beschrieben. Selbstverständlich können Mischungen der obengenannten Verbindungen mit mindestens zwei gegenüber Isocyanaten reaktionsfähigen Wasserstoffatomen mit einem Molekulargewicht von 400–10 000, z.B. Mischungen von Polyäthern und Polyestern, eingesetzt werden.

Von besonderem Vorteil ist es dabei in manchen Fällen, niedrigschmelzende und hochschmelzende Polyhydroxylverbindungen miteinander zu kombinieren (DE-Offenlegungsschrift 2 706 297).

3. Gegebenenfalls als Ausgangskomponenten Verbindungen mit mindestens zwei gegenüber Isocyanaten reaktionsfähigen Wasserstoffatomen und einem Molekulargewicht von 32 bis 400. Auch in diesem Fall versteht man hierunter Hydroxylgruppen und/oder Aminogruppen und/oder Thiolgruppen und/oder Carboxylgruppen aufweisende Verbindungen, vorzugsweise Hydroxylgruppen und/oder Aminogruppen aufweisende Verbindungen, die als Kettenverlängerungsmittel oder Vernetzungsmittel dienen. Diese Verbindungen weisen in der Regel 2 bis 8, vorzugsweise 2 bis 4, gegenüber Isocyanaten reaktionsfähige Wasserstoffatome auf.

Auch in diesem Fall können Mischungen von verschiedenen Verbindungen mit mindestens zwei gegenüber Isocyanaten reaktionsfähigen Wasserstoffatomen mit einem Molekulargewicht von 32 bis 400 verwendet werden.

Als Beispiele für derartige Verbindungen seien genannt:

Äthylenglykol, Propylenglykol-(1,2) und -(1,3), Butylenglykol-(1,4) und -(2,3), Pentandiol-(1,5), Hexandiol-(1,6), Octandiol-(1,8), Neopentylglykol, 1,4-Bis-hydroxymethyl-cyclohexan, 2-Methyl-1,3-propandiol, Dibrombutendiol (US-Patentschrift 3 723 392), Glyzerin, Trimethylolpropan, Hexantriol-(1,2,6), Trimethyloläthan, Pentaerythrit, Chinit, Mannit und Sorbit, Rizinusöl, Diäthylenglykol, Triäthylenglykol, Tetraäthylenglykol, höhere Polyäthylenglykole mit einem Molekulargewicht bis 400, Dipropylenglykol, höhere Polypropylenglykole mit einem Molekulargewicht bis 400, Dibutylenglykol, höhere Polybutylenglykole mit einem Molekulargewicht bis 400, 4,4'-Dihydroxy-diphenylpropan, Di-hydroxymethyl-hydrochinon, Äthanolamin, Diäthanolamin, N-Methyldiäthanolamin, Triäthanolamin und 3-Aminopropanol.

Als niedermolekulare Polyole kommen erfindungsgemäss auch die Gemische von Hydroxyaldehyden und Hydroxyketonen («Formose») bzw. die hieraus durch Reduktion erhaltenen mehrwertigen Alkohole («Formit») in Frage, wie sie bei der Selbstkondensation von Formaldehydhydrat in Gegenwart von Metallverbindungen als Katalysator und von zur Endiolbildung befähigten Verbindungen als Co-Katalysator entstehen (DE-Offenlegungsschriften 2 639 084, 2 714 084, 2 714 104, 2 721 186, 2 738 154 und 2 738 512). Um Kunststoffe mit verbesserter Flammwidrigkeit zu erhalten, setzt man diese Formosen mit Vorteil in Kombination mit Aminoplastbildnern und/oder Phosphiten ein (DE-Offenlegungsschriften 2 738 513 und 2 738 532). Auch Lösungen von Polyisocyanatpolyadditionsprodukten, insbesondere von ionische Gruppen aufweisenden Polyurethanharnstoffen und/oder von Polyhydrazodicarbonamiden, in niedermolekularen, mehrwertigen Alkoholen kommen erfindungsgemäss als Polyolkomponente in Betracht (DE-Offenlegungsschrift 2 638 759).

Erfindungsgemäss geeignete aliphatische Diamine sind beispielsweise Äthylendiamin, 1,4-Tetramethylendiamin, 1,11-Undecamethylendiamin, 1,12-Dodecamethylendiamin sowie deren Gemische, 1-Amino-3,3,5-trimethyl-5-aminomethylcyclohexan («Isophorondiamin»), 2,4- und 2,6-Hexahydrotoluylendiamin sowie deren Gemische, Perhydro-2,4'- und 4,4'-diaminodiphenylmethan, p-Xylylendiamin, Bis-(3-aminopropyl)-methylamin, Diamino-perhydroanthrazene (DE-Offenlegungsschrift 2 638 731) und cycloaliphatische Triamine gemäss DE-Offenlegungsschrift 2 614 244. Auch Hydrazin und substituierte Hydrazine, z.B. Methylhydrazin, N,N'-Dimethylhydrazin und deren Homologe sowie Säuredihydrazide kommen erfindungsgemäss in Betracht, z.B. Carbodihydrazid, Oxalsäuredihydrazid, die Dihydrazide von Malonsäure, Bernsteinsäure, Glutarsäure, Adipinsäure, β-Methyladipinsäure, Sebazinsäure, Hydracrylsäure und Terephthalsäure; Semicarbazido-alkylen-hydrazide wie z.B. β-Semicarbazidopropionsäurehydrazid (DE-Offenlegungsschrift 1 770 591), Semicarbazido-alkylencarbazinester wie z.B. 2-Semicarbazidoäthyl-carbazinester (DE-Offenlegungsschrift 1 918 504) oder auch Aminosemicarbazid-Verbindungen wie z.B. β-Aminoäthyl-semicarbazido-carbonat (DE-Offenlegungsschrift 1 902 931). Zur Steuerung ihrer Reaktivität können die Aminogruppen ganz oder teilweise durch Aldimin- bzw. Ketimin-Gruppen blokkiert sein (US-Patentschrift 3 734 894; DE-Offenlegungsschrift 2 637 115).

Als Beispiele für aromatische Diamine seien Bisanthranilsäureester gemäss den DE-Offenlegungsschriften 2 040 644 und 2 160 590, 3,5- und 2,4-Diaminobenzoesäureester gemäss DE-Offenlegungsschrift 2 025 900, die in den DE-Offenlegungsschriften 1 803 635 (US-Patentschriften 3 681 290 und 2 736 350), 2 040 650 und 2 160 589 beschriebenen estergruppenhaltigen Diamine, die Äthergruppen aufweisenden Diamine gemäss DE-Offenlegungsschriften 1 770 525 und 1 809 172 (US-Patentschriften 3 654 364 und 3 736 295), gegebenenfalls in 5-Stellung substituierte 2-Halogen-1,3-Phenylendiamine (DE-Offenlegungsschriften 2 001 772, 2 025 896 und 2 065 869), 3,3'-Dichlor-4,4'-diamino-diphenylmethan, Toluylendiamin, 4,4'-Diaminodiphenylmethan, 4,4'-Diaminodiphenyldisulfide (DE-Offenlegungsschrift 2 404 976), Diaminodiphenyldithioäther (DE-Offenlegungsschrift 2 509 404), durch Alkylthiogruppen substituierte aromatische Diamine (DE-Offenlegungsschrift 2 638 760), Diaminobenzolphosphonsäureester (DE-Offenlegungsschrift 2 459 491), Sulfonat- oder Carboxylatgruppen enthaltende aromatische Diamine (DE-Offenlegungsschrift 2 720 166) sowie die in der DE-Offenlegungsschrift 2 635 400 aufgeführten hochschmelzenden Diamine genannt. Beispiele für aliphatisch-aromatische Diamine sind die Aminoalkylthioaniline gemäss DE-Offenlegungsschrift 2 734 574.

Als Kettenverlängerungsmittel können erfindungsgemäss auch Verbindungen wie 1-Mercapto-3-aminopropan, gegebenenfalls substituierte Aminosäuren, z.B. Glycin, Alanin, Valin, Serin und Lysin sowie gegebenenfalls substituierte Dicarbonsäuren, beispielsweise Bernsteinsäure, Adipinsäure, Phthalsäure, 4-Hydroxyphthalsäure und 4-Aminophthalsäure verwendet werden.

Ferner können gegenüber Isocyanaten monofunktionelle Verbindungen in Anteilen von 0,01 bis 10 Gew.-%, bezogen auf Polyurethanfeststoff, als sogenannte Kettenabbrecher mitverwendet werden. Derartige monofunktionelle Verbindungen sind z.B. Monoamine wie Butyl- und Dibutylamin, Octylamin, Stearylamin, N-Methylstearylamin, Pyrrolidin, Piperidin und Cyclohexylamin, Monoalkohole wie Butanol, 2-Äthylhexanol, Octanol, Dodecanol, die verschiedenen Amylalkohole, Cyclohexanol, Äthylenglykolmonoäthyläther.

4. Gegebenenfalls als Hilfs- und Zusatzmittel:

a) Wasser und/oder leicht flüchtige anorganische oder organische Substanzen als Treibmittel. Als organische Treibmittel kommen z.B. Aceton, Äthylacetat, halogensubstituierte Alkane wie Methylenchlorid, Chloroform, Äthylidenchlorid, Vinylidenchlorid, Monofluortrichlormethan, Chlordifluormethan, Dichlordifluormethan, ferner Butan, Hexan, Heptan oder Diäthyläther, als anorganische Treibmittel z.B. Luft, $CO_2$ oder $N_2O$, in Frage. Eine Treibwirkung kann auch durch Zusatz von bei Temperaturen über Raumtemperatur unter Abspaltung von Gasen, beispielsweise von Stickstoff, sich zersetzenden Verbindungen, z.B. Azoverbindungen wie Azodicarbonamid oder Azoisobuttersäurenitril, erzielt werden. Weitere Beispiele für Treibmittel sowie Einzelheiten über die Verwendung von Treibmitteln sind im Kunststoff-Handbuch, Band VII, herausgegeben von Vieweg und Höchtlen, Carl-Hanser-Verlag, München 1966, z.B. auf den Seiten 108 und 109, 453 bis 455 und 507 bis 510 beschrieben.

b) Katalysatoren der an sich bekannten Art, z.B. tertiäre Amine, wie Triäthylamin, Tributylamin, N-Methyl-morpholin, N-Äthyl-morpholin, N,N,N',N'-Tetramethyl-äthylendiamin, Pentamethyl-diäthylentriamin und höhere Homologe (DE-Offenlegungsschriften 2 624 527 und 2 624 528), 1,4-Diazabicyclo-(2,2,2)-octan, N-Methyl-N'-dimethylaminoäthylpiperazin, Bis-(dimethylaminoalkyl)-piperazine (DE-Offenlegungsschrift 2 636 787), N,N-Dimethylbenzylamin, N,N-Dimethylcyclohexylamin, N,N-Diäthylbenzylamin, Bis-(N,N-diäthylaminoäthyl)-adipat, N,N,N',N'-Tetramethyl-1,3-butandiamin, N,N-Dimethyl-β-phenyläthylamin, 1,2-Dimethylimidazol, 2-Methylimidazol, monocyclische und bicyclische Amidine (DE-Offenlegungsschrift 1 720 633), Bis-(dialkylamino)-alkyl-äther (US-Patentschrift 3 330 782, DE-Auslegeschrift 1 030 558, DE-Offenlegungsschriften 1 804 361 und 2 618 280) sowie Amidgruppen (vorzugsweise Formamidgruppen) aufweisende tertiäre Amine gemäss den DE-Offenlegungsschriften 2 523 633 und 2 732 292). Als Katalysatoren kommen auch an sich bekannte Mannichbasen aus sekundären Aminen, wie Dimethylamin, und Aldehyden, vorzugsweise Formaldehyd, oder Ketonen wie Aceton, Methyläthylketon oder Cyclohexanon und Phenolen, wie Phenol, Nonylphenol oder Bisphenol, in Frage.

Gegenüber Isocyanatgruppen aktive Wasserstoffatome aufweisende tertiäre Amine als Katalysator sind z.B. Triäthanolamin, Triisopropanolamin, N-Methyl-diäthanolamin, N-Äthyl-diäthanolamin, N,N-Dimethyl-äthanolamin, deren Umsetzungsprodukte mit Alkylenoxiden wie Propylenoxid und/oder Äthylenoxid sowie sekundär-tertiäre Amine gemäss DE-Offenlegungsschrift 2 732 292.

Als Katalysatoren kommen ferner Silaamine mit Kohlenstoff-Silizium-Bindungen, wie sie z.B. in der DE-Patentschrift 1 229 290 (entsprechend der US-Patentschrift 3 620 984) beschrieben sind, in Frage, z.B. 2,2,4-Trimethyl-2-silamorpholin und 1,3-Diäthylaminomethyl-tetramethyl-disiloxan.

Als Katalysatoren kommen auch stickstoffhaltige Basen wie Tetraalkylammoniumhydroxide, ferner Alkalihydroxide wie Natriumhydroxid, Alkaliphenolate wie Natriumphenolat oder Alkalialkoholate wie Natriummethylat in Betracht. Auch Hexahydrotriazine können als Katalysatoren eingesetzt werden (DE-Offenlegungsschrift 1 769 043).

Die Rekation zwischen NCO-Gruppen und Zerewitinoffaktiven Wasserstoffatomen wird auch durch Lactame und Azalactame stark beschleunigt, wobei sich zunächst ein Assoziat zwischen dem Lactam und der Verbindung mit acidem Wasserstoff ausbildet. Derartige Assoziate und ihre katalytische Wirkung werden in den DE-Offenle-

gungsschriften 2 062 288, 2 062 289, 2 117 576 (US-Patentschrift 3 758 444), 2 129 198, 2 330 175 und 2 330 211 beschrieben.

Erfindungsgemäss können auch organische Metallverbindungen, insbesondere organische Zinnverbindungen, als Katalysatoren, verwendet werden. Als organische Zinnverbindungen kommen neben schwefelhaltigen Verbindungen wie Di-n-octyl-zinn-mercaptid (DE-Auslegeschrift 1 769 367; US-Patentschrift 3 645 927) vorzugsweise Zinn(II)-salze von Carbonsäure wie Zinn(II)-acetat, Zinn(II)-octoat, Zinn(II)-äthylhexoat und Zinn(II)-laurat und die Zinn(IV)-Verbindungen, z.B. Dibutylzinnoxid, Dibutylzinndichlorid, Dibutylzinndiacetat, Dibutylzinndilaurat, Dibutylzinnmaleat oder Dioctylzinndiacetat in Betracht.

Selbstverständlich können alle obengenannten Katalysatoren als Gemische eingesetzt werden. Von besonderem Interesse sind dabei Kombinationen aus organischen Metallverbindungen und Amidinen, Aminopyridinen oder Hydrazinopyridinen (DE-Offenlegungsschriften 2 434 185, 2 601 082 und 2 603 834).

Weitere Vertreter von erfindungsgemäss zu verwendenden Katalysatoren sowie Einzelheiten über die Wirkungsweise der Katalysatoren sind im Kunststoff-Handbuch, Band VII, herausgegeben von Vieweg und Höchtlen, Carl-Hanser-Verlag, München 1966, z.B. auf den Seiten 96 bis 102 beschrieben.

Die Katalysatoren werden in der Regel in einer Menge zwischen etwa 0,001 und 10 Gew.-%, bezogen auf die Gesamtmenge an Verbindungen mit mindestens zwei gegenüber Isocyanaten reaktionsfähigen Wasserstoffatomen, eingesetzt.

c) Oberflächenaktive Zusatzstoffe, wie Emulgatoren und Schaumstabilisatoren. Als Emulgatoren kommen z.B. die Natriumsalze von Ricinusöl-sulfonaten oder Salze von Fettsäuren mit Aminen wie ölsaures Diäthylamin oder stearinsaures Diäthanolamin in Frage. Auch Alkali- oder Ammoniumsalze von Sulfonsäuren wie etwa von Dodecylbenzlsulfonsäure oder Dinaphthylmethandisulfonsäure oder von Fettsäuren wie Ricinolsäure oder von polymeren Fettsäuren können als oberflächenaktive Zusatzstoffe mitverwendet werden.

Als Schaumstabilisatoren kommen vor allem Polyäthersiloxane, speziell wasserlösliche Vertreter, in Frage. Diese Verbindungen sind im allgemeinen so aufgebaut, dass ein Copolymerisat aus Äthylenoxid und Propylenoxid mit einem Polydimethylsiloxanrest verbunden ist. Derartige Schaumstabilisatoren sind z.B. in den US-Patentschriften 2 834 748, 2 917 480 und 3 629 308 beschrieben. Von besonderem Interesse sind vielfach über Allophanatgruppen verzweigte Polysiloxan-Polyoxyalkylen-Copolymere gemäss DE-Offenlegungsschrift 2 558 523.

d) Reaktionsverzögerer, z.B. sauer reagierende Stoffe wie Salzsäure oder organische Säurehalogenide, ferner Zellregler der an sich bekannten Art wie Paraffine oder Fettalkohole oder Dimethylpolysiloxane sowie Pigmente oder Farbstoffe und Flammschutzmittel der an sich bekannten Art, z.B. Tris-chloräthylphosphat, Trikresylphosphat oder Ammoniumphosphat und -polyphosphat, ferner Stabilisatoren gegen Alterungs- und Witterungseinflüsse, Weichmacher und fungistatisch und bakteriostatisch wirkende Substanzen sowie Füllstoffe wie Bariumsulfat, Kieselgur, Russ oder Schlämmkreide.

Weitere Beispiele von gegebenenfalls erfindungsgemäss mitzuverwendenden oberflächenaktiven Zusatzstoffen und Schaumstabilisatoren sowie Zellreglern, Reaktionsverzögerern, Stabilisatoren, flammhemmenden Substanzen, Weichmachern, Farbstoffen und Füllstoffen sowie fungistatisch und bakteriostatisch wirksamen Substanzen sowie Einzelheiten über Verwendungs- und Wirkungsweise dieser Zusatzmittel sind im Kunststoff-Handbuch, Band VII, herausgegeben von Vieweg und Höchtlen, Carl-Hanser-Verlag, München 1966, z.B. auf den Seiten 103 bis 113 beschrieben.

Die TDI-Rückstandsschlacken (Komponente C des erfindungsgemässen Verfahrens) fallen, wie oben bei der Darlegung der vorliegenden Erfindung zugrundeliegenden Problemstellung eingehend beschrieben, zwangsweise bei den heute üblichen grosstechnischen Verfahren zur Herstellung von 2,4- und/oder 2,6-Toluylendiisocyanat bei der Isolierung des reinen, monomeren Diisocyanats aus dem rohen Phosgenierungsprodukt von Diaminotoluolen in einer Menge von ca. 10 Gew.-%, bezogen auf die theoretisch mögliche Ausbeute an monomerem Diisocyanat, an. Wie ebenfalls bereits erwähnt, werden üblicherweise die noch meist über 150 °C heissen, teerartigen Rückstände mit Wasser abgeschreckt, wobei ein grosser Teil der im Rückstand noch vorhandenen freien Isocyanatgruppen zu Polyharnstoffgruppen abreagiert und eine grobteilige, unregelmässig geformte, unlösliche Schlacke entsteht. Diese Schlacke hat zwar noch einen geringen Gehalt an freien NCO-Gruppen (im allgemeinen weniger als 15 Gew.-%, meist 1 bis 10 Gew.-%), ist jedoch praktisch frei an monomeren Diisocyanaten. Neben den NCO-Gruppen weisen die TDI-Rückstandsschlacken in unterschiedlichen Mengenverhältnissen Harnstoff-, Biuret-, Uretdion-, Isocyanurat-, Carbodiimid-, Uretonimin- und gegebenenfalls auch Methyl-benzimidazolongruppen sowie deren Biuretisierungsprodukte auf.

Die Schlacken sind über diese verschiedenen funktionellen Gruppen so hoch vernetzt, dass sie selbst bei einer mittleren Teilchengrösse von ca. 5 µm in inerten organischen Lösungsmitteln wie Methylenchlorid, Cyclohexan, Cyclohexanon, Toluol, Xylol oder Dichlorbenzol auch bei Siedetemperatur praktisch unlöslich sind. Auch in siedendem Dimethylformamid löst sich der Rückstand nicht auf, sondern wird nur teilweise angequollen. Beim Erhitzen erweicht, wenn überhaupt, nur ein sehr geringer Anteil der erfindungsgemäss eingesetzten TDI-Destillationsrückstände oberhalb ca. 200 °C, jedoch tritt Zersetzung unter Gasentwicklung oberhalb ca. 250–280 °C ein, ohne dass der Rückstand vorher schmilzt.

Die grobkörnige TDI-Rückstandsschlacke muss vor ihrer Verwendung als reaktiver Füllstoff im

erfindungsgemässen Verfahren zerkleinert werden. Zu diesem Zweck wird die, gegebenenfalls mit Wasser benetzte oder beim Denaturierungsprozess im Rührwerkskessel in Wasser suspendierte, sehr grobkörnige TDI-Rückstandsschlacke zunächst vorzugsweise mit Hilfe einer Zerkleinerungsmaschine, beispielsweise mit einem Schneidgranulator oder einer Hammermühle, auf weniger als 3 mm vorzerkleinert und anschliessend zu einem beliebigen Zeitpunkt nach bekannten Mahlverfahren entweder in der Nass- oder Trockenphase auf die erforderliche Endfeinheit gebracht.

Wenn die TDI-Rückstände, beispielsweise beim grosstechnisch praktizierten, oben beschriebenen Denaturierungsprozess, in Wasser anfallen und vorgesehene Folgereaktionen in wässriger Phase ausgeführt werden können, bietet sich besonders ökonomisch und umweltfreundlich eine Nassfein- oder Nassfeinstzerkleinerung in diskontinuierlich oder kontinuierlich arbeitenden ein- oder zweistufig hintereinander geschalteten Maschinen an. Die Feststoffkonzentrationen liegen während der Nassmahlung vorzugsweise zwischen 15 und 45 Gew.-%. Neben Rohr- und Kugelmühlen kommen besonders vorteilhaft Zahnkolloid-, Trigonal-Zahnring-, Korundscheiben- und Rührwerkskugelmühlen in Frage. Für besonders feine Korngrössen eignet sich beispielsweise die Kombination Zahnkolloid- und Rührwerkskugelmühle.

Die Zerkleinerung in wässriger Phase kann so gesteuert werden, dass infolge der bei der Mahlung auftretenden (und gegebenenfalls durch Kühlung regulierbaren) Wärme und wegen der Erzeugung frischer Schnittflächen bei gleichzeitiger starker Vergrösserung der Mahlgutoberfläche auch ohne externe Wärmezufuhr Reaktion der TDI-Rückstandsschlacke mit dem Wasser eintritt. Selbstverständlich können beim Mahlen im wässrigen Medium auch durch Zugabe der weiter unten im Detail beschriebenen reaktionsfähigen Verbindungen andere Reaktionen bewirkt werden, beispielsweise Polyadditionen mit NH-Verbindungen oder Polykondensationen mit Carbonylverbindungen.

Zweckmässig arbeitet man hierbei je nach Korngrösse mit einem Unterschuss an NH-Verbindungen in starker, wässriger Verdünnung und rührt mit sehr grosser Turbulenz, gegebenenfalls bereits unter Mitverwendung einer Zerkleinerungsmaschine, zwecks Ausbildung eines feinkörnigeren TDI-Rückstandes.

Auf diese Weise wird beispielsweise bei der Denaturierung in wässriger Ammoniaklösung oder ammoniakabspaltenden Lösungen, wie z.B. Ammonium(bi)carbonatlösung, eine TDI-Rückstandsschlacke gewonnen, die einen erhöhten Gehalt an – zum Teil nur monosubstituierten – externen Harnstoffgruppen aufweist, die für spätere Kondensationsreaktionen besonders leicht zugänglich sind.

Die Denaturierung in Gegenwart von ionomeren Aminen führt direkt zu Salzgruppen enthaltenden oder zur Salzbildung befähigten TDI-Rückständen.

In speziellen Fällen kann beim Mahlvorgang ein Teil oder das gesamte Wasser durch eine andere, gegebenenfalls gegenüber Isocyanaten reaktionsfähige Gruppen aufweisende Flüssigkeit, ersetzt werden, die jeweils im Hinblick auf die spätere Weiterverarbeitung des gemahlenen Rückstands ausgewählt wird.

Die bei der Nasszerkleinerung erhaltenen, je nach Arbeitsweise noch unterschiedliche Menge freier NCO-Gruppen aufweisenden oder NCO-freien TDI-Rückstandsschlacken können entweder als sehr feinteilige Suspensionen, Pasten oder (nach Isolierung des Suspensionsmittels) als Pulver in derselben Weise wie die durch Trockenzerkleinerung erhältlichen TDI-Rückstands-Pulver weiterverarbeitet werden.

Für die Trockenmahlung wird unter 2–3 mm vorzerkleinerte und bevorzugt bei Temperaturen unter 50 °C vorgetrocknete, nicht wesentlich über 15 Gew.-%, bevorzugt unter 5 Gew.-% Feuchtigkeit enthaltende TDI-Rückstandsschlacke eingesetzt. Bei der Wahl der Trockenzerkleinerungsmaschinen sind im wesentlichen nur die gewünschte Endfeinheit und Korngrössenverteilung, aber auch die Mahlkosten von vorrangiger Bedeutung. Die erfindungsgemäss eingesetzten Rückstandsschlacken sind im Vergleich zu Kunststoffen sehr hart und wegen ihres hohen Vernetzungsgrades in den üblichen Zerkleinerungsmaschinen ohne Kühlungsprobleme bei Temperaturen bis 250–300 °C mahlbar, ohne zu erweichen, was auch zur Erzielung von Feinstkorngrössen im Bereich von unter 1 µm bis 5 µm von besonderer Bedeutung ist. Diese Feinstkorngrössen von $<5$ µm, insbesondere $<1$ µm, sind erfindungsgemäss besonders bevorzugt, vor allem wenn Polyurethanschaumstoffe hergestellt werden sollen.

Verwendung finden beispielsweise Stifts-, Kugel- oder Pralltellermühlen, ferner Luftstrommühlen wie Schlagkreuz-, Zahnkranz- oder Turbomühlen, aber besonders bevorzugt Dampfstrahl- oder Luftstrahlmühlen, weil in diesen die Zerkleinerung hauptsächlich durch gegenseitige Teilchenstösse, weniger durch Wandstösse, stattfindet.

Selbstverständlich sind auch bei der Trockenzerkleinerung sowohl ein- als auch mehrstufige, diskontinuierliche oder kontinuierliche Mahlprozesse möglich, bei denen entweder TDI-Rückstands-Feinstpulver mit freien Isocyanatgruppen oder durch Zugabe flüssiger Reaktionskomponenten, die während der Zerkleinerung eine Modifizierungsreaktion, im Falle der Verwendung niedrig siedender Komponenten sogar aus der Gasphase bewirken, TDI-Rückstandsschlacken-Folgeprodukte in Feinstkorngrössen in grosstechnischen Mengen produziert werden können.

Schlagkreuz-, Zahnkranz- und Turbomühlen werden in mehrstufigen Mahlprozessen bevorzugt.

Überraschend gut geeignet für die weitere Zerkleinerung sind auch die im Handel in allen Labor- und Produktionsgrössen erhältlichen Mischapparaturen, wenn sie z.B. mit pflugscharähnlichen Mischelementen und (bevorzugt mehrstufigen) Messerköpfen ausgerüstet sind. Diese Mischapparaturen können gleichzeitig als Reaktor dienen. Durch das Vermahlen werden die in der Rückstandsschlacke inkludierten, obengenannten reaktiven Gruppierungen für die verschiedensten, weiter unten näher beschriebenen, chemischen Umsetzungen zugänglich gemacht.

Die erfindungsgemäss als reaktiver organischer Füllstoff einzusetzende feinteilige TDI-Rückstandsschlacke (Komponente C des erfindungsgemässen Verfahrens) kann sowohl für sich als auch im Gemisch mit jeder der anderen mitverwendeten Komponenten eingesetzt werden. Beim Einrühren des Rückstandspulvers in monomere, flüssige Polyisocyanate beginnt schon nach wenigen Stunden die Konzentration der freien Isocyanatgruppen unter Viskositätserhöhung abzunehmen. Es empfiehlt sich daher, wenn die Komponenten A und C im erfindungsgemässen Verfahren gemeinsam eingesetzt werden sollen, die Vorvermischung kurz vor der Umsetzung mit der Komponente B vorzunehmen. Demgegenüber bilden die TDI-Rückstandspulver, vor allem wenn sie sehr fein gemahlen wurden (mittlere Teilchengrösse bevorzugt unter 5 µm), mit flüssigen Polyhydroxylverbindungen (Komponente B des erfindungsgemässen Verfahrens) Suspensionen, welche mehrere Tage lagerstabil sind. Die Lagerstabilität dieser Dispersionen wird auf mehrere Monate verlängert, wenn man einen Teil der im pulverisierten TDI-Rückstand vorhandenen freien Isocyanatgruppen mit Hydroxylgruppen der Polyhydroxylverbindung durch kurzes Erwärmen der Suspension (bevorzugt auf Temperaturen zwischen 80 und 150 °C) zur Umsetzung bringt.

Es ist als überraschend anzusehen, dass NCO-Gruppen aufweisende Präpolymere aus den Suspensionen und einem Überschuss an Polyisocyanat ebenfalls sehr lagerstabil sind, während, wie erwähnt, Mischungen des Rückstandspulvers mit Polyisocyanaten geringere Lagerstabilität aufweisen.

Die TDI-Rückstandspulver können vor ihrer Verwendung im erfindungsgemässen Verfahren auch in anderer Weise chemisch modifiziert werden, wobei vor allem die geringen Mengen an freien Isocyanatgruppen zur Reaktion gebracht werden. Das Modifizierungsmittel kann dabei sowohl gasförmig als auch gelöst in einem inerten organischen Lösungsmittel oder in Wasser angewandt werden.

So ist es z.B. möglich, Ammoniak, gasförmige Amine oder gasförmige Alkohole – bevorzugt nach dem Gegenstromprinzip – durch die pulverisierte Schlacke zu leiten, wobei unter exothermer Reaktion auch ohne mechanische Durchmischung in sehr kurzer Zeit (je nach Feinheit des Pulvers in weniger als 1 Minute) die freien Isocyanatgruppen unter Ausbildung von Harnstoff- bzw. Urethangruppen abreagieren. Diese neu in das TDI-Rückstandspulver eingeführten funktionellen Gruppen sind besonders leicht Kondensationsreaktionen mit Carbonylverbindungen, insbesondere Formaldehyd, zugänglich, die gegebenenfalls auch in Gasform – gleichzeitig oder anschliessend – durch das Pulver geleitet werden können. Anstelle von Formaldehyd und Ammoniak kann aber auch Urotropin unter hydrolysierenden Bedingungen zur Ausbildung von Methylenharnstoffbrücken eingesetzt werden.

Eine weitere Modifizierungsmöglichkeit ist die Reaktion mit Wasserdampf. Während die Umsetzung der Isocyanatgruppen mit Wasser auch bei Verwendung von sehr feingemahlener TDI-Rückstandsschlacke unter 100 °C sehr langsam abläuft, kann man eine quantitative Polyharnstoffbildung innerhalb kurzer Zeit erreichen, wenn man Reaktionstemperaturen deutlich oberhalb des Siedepunkts des Wassers, bevorzugt über 130 °C, anwendet. Dabei genügt es bei ausreichend zerkleinerter TDI-Rückstandsschlacke, diese mit Wasser benetzt den erwähnten Temperaturen auszusetzen. Danach enthält das Rückstandspulver praktisch keine freien NCO-Gruppen mehr. Selbstverständlich können auch Alkohole oder Carbonsäuren (z.B. Essigsäure) eingesetzt werden, um die freien NCO-Gruppen des Pulvers abzureagieren.

Für die erwähnten Modifizierungsreaktionen sind alle primären und sekundären Mono- und Polyamine, primären, sekundären und tertiären Mono- und Polyalkohole, sowie Aldehyde, Ketone und Carbonsäuren brauchbar, welche sich leicht in den gasförmigen Zustand überführen lassen. Beispielhaft seien Äthylamin, Diäthylamin, Butylamin, Dibutylamin, Methanol, Äthanol, Propanol, Butanol, Äthylenglykol, Diäthylenglykol, Propylenglykol, Dipropylenglykol, Formaldehyd, Acetaldehyd, Propionaldehyd, Butyraldehyd, Aceton, Methyläthylketon, Essigsäure und Ameisensäure genannt.

Für die Modifizierung des TDI-Rückstandspulvers aus wässriger Phase oder aus einem organischen Medium sind vor allem unter dem Einfluss von Katalysatoren ablaufende Reaktionen der Isocyanatgruppen untereinander von Interesse, beispielsweise die Bildung von Uretdiongruppen unter dem Einfluss trisubstituierter Phosphine als Katalysator oder die Bildung von Carbodiimidgruppen unter dem Einfluss von Phospholinoxid. Es ist darüber hinaus z.B. auch möglich, schwach saure Verbindungen (z.B. Bisulfit oder andere Isocyanatabspalter) an die freien Isocyanatgruppen der TDI-Rückstandsschlacke zu addieren, welche bei höheren Temperaturen später zu jedem gewünschten Zeitpunkt unter Freisetzung der Isocyanatgruppen wieder angespalten werden können. Eine weitere Modifizierungsmöglichkeit besteht in der Addition von Aminen, Amiden, Phosphiten oder Carbonsäuren an die Carbodiimidgruppen des TDI-Destillationsrückstandes, wobei Guanidin-, Phosphonoformamidin- bzw. Acylharnstoffgruppen entstehen (siehe die DE-Offenlegungsschriften 2 714 289, 2 714 292 und 2 714 293). Selbstverständlich können auch die oben im Zusammenhang mit einer Modifizierung aus der Gasphase beschriebenen Umsetzungen mit Ammoniak, Aminen, Alkoholen und Carbonylverbindungen in Wasser oder einem organischen Lösungsmittel als Reaktionsmedium ausgeführt werden. Geeignete Amine und Alkohole sind neben den bereits genannten Verbindungen z.B.

auch die Kettenverlängerer bzw. Kettenabbrecher, welche weiter oben als Komponente B des erfindungsgemässen Verfahrens beschrieben wurden. Für Modifizierungsreaktionen geeignete Carbonylverbindungen werden z.B. in den DE-Offenlegungsschriften 2 324 134, 2 639 254 sowie 2 713 198 genannt. Bevorzugte Carbonylverbindung ist, wie schon erwähnt, Formaldehyd.

Als Reaktionsmedium kommen für die erwähnten chemischen Modifizierungsreaktionen des TDI-Rückstandspulvers neben Wasser die an sich bekannten organischen Lösungsmittel mit einem Siedepunkt bevorzugt unter 150 °C, besonders bevorzugt unter 120 °C, in Frage, welche jedoch, wie oben ausgeführt wurde, für das Rückstandspulver praktisch Nichtlöser sind. Beispielhaft seien Methylenchlorid, Aceton, Petroläther, Cyclohexan, Äthylacetat, Benzol, Toluol und Xylol erwähnt. Das flüssige Reaktionsmedium kann nach der Modifizierungsreaktion durch Filtration und anschliessende Trocknung oder durch Destillation entfernt werden. In vielen Fällen genügt schon eine sehr geringe Menge an Flüssigkeit (häufig weniger als 10 Gew.-%, bezogen auf Rückstandspulver), um die Auflösung des Modifizierungsmittels bzw. dessen gleichmässige Verteilung im TDI-Rückstandspulver zu ermöglichen. Sind für die erwähnten Modifizierungsreaktionen Temperaturen erforderlich, welche über dem Siedepunkt des verwendeten Lösungsmittels liegen, dann wird in einem Druckgefäss gearbeitet.

Die beschriebenen Modifizierungsreaktionen mit den vorzerkleinerten TDI-Rückstandsschlacken können in speziellen Fällen, bei denen pastöse Zwischenstufen auftreten, mit Vorteil auch in selbstreinigenden Schneckenmaschinen durchgeführt werden. Geeignete Extruder mit selbstreinigender Schneckengeometrie sind an sich bekannt und werden z.B. in «Schneckenmaschinen in der Verfahrenstechnik» von H. Hermann, Springer-Verlag, Berlin/Heidelberg/New York, 1972, S. 161–170, und insbesondere auch in den US-Patentschriften 3 963 679 und 3 993 641 beschrieben.

Die Durchführung von organisch-chemischen Rekationen in Reaktionsschnecken ist zwar bekannt. Im allgemeinen bediente man sich jedoch der Reaktionsschnecken zur Herstellung und Modifizierung von Polymerschmelzen, wobei Temperaturen oberhalb der Erweichungspunkte der jeweiligen Produkte angewendet werden. Die Reaktionen des erfindungsgemässen Verfahrens gehen hingegen immer von festem TDI-Rückstandspulver aus. Danach werden gegebenenfalls verschiedene pastenartige Zustände durchlaufen, in denen in noch vorhandenen flüssigen Reaktionskomponenten die feste zerkleinerte TDI-Rückstandsschlacke suspendiert ist. In diesen Phasen neigt das Reaktionsgut besonders stark zum Verkleben und Verklumpen. Letztlich, nach weitgehender Umsetzung der zudosierten, bevorzugt niedermolekularen Reaktionskomponenten, wird ein hartes, granuliertes oder körniges Endprodukt erhalten. Es war nicht zu erwarten, dass mit den genannten Schneckenmaschinen chemische Reaktionen durchführbar sein würden, bei welchen die erfindungsgemässen nicht unzersetzt schmelzbaren TDI-Rückstände eingesetzt werden. Es war besonders überraschend, dass mittels derartiger Schneckenmaschinen die Modifizierungsreaktion sogar in den in Wasser denaturierten, duromeren TDI-Rückständen im technischen Massstab praktisch lösungsmittelfrei so gut unter Kontrolle gehalten werden können, dass direkt beliebig lange lagerstabile, pressbare Produkte erhalten werden. Insbesondere war es überraschend, dass beim Austritt aus der Schnecke bereits ein feines rieselfähiges Pulver anfällt, das ohne weitere Vermahlung für viele Einsatzgebiete verwendet werden kann.

In manchen Fällen ist es erwünscht, in die TDI-Rückstandspulver kationische und/oder anionische Gruppen bzw. zur Salzbildung befähigte Gruppen einzuführen. Dies kann dadurch geschehen, dass man die freien NCO-Gruppen des Pulvers in einem flüssigen Reaktionsmedium mit Verbindungen zur Reaktion bringt, welche neben den ionischen bzw. zur Salzbildung befähigten Gruppen auch acide Wasserstoffatome aufweisen. Derartige Verbindungen werden beispielsweise in der DE-OS-2 550 797 beschrieben. Es ist auch möglich, in die erfindungsgemäss zu verwendenden reaktiven Füllstoffpartikel olefinisch ungesättigte Gruppen einzuführen. Dies kann in der Weise geschehen, dass man bei einer der oben beschriebenen Modifizierungsreaktionen (sei es aus der Gasphase, sei es in einem inerten flüssigen Reaktionsmedium) solche Reaktionspartner einsetzt, welche olefinisch ungesättigte Gruppierungen enthalten. Beispiele hierfür sind ungesättigte Alkohole wie Allylalkohol oder der Hydroxyäthylester von Acrylsäure bzw. Methacrylsäure, ungesättigte Carbonylverbindungen wie Crotonaldehyd oder Acrolein oder ungesättigte Carbonsäuren wie Acrylsäure, Methacrylsäure, Maleinsäure oder Fumarsäure. Derartige Füllstoffteilchen mit copolymerisierbaren ungesättigten Gruppen sind vor allem dann von Interesse, wenn im fertigen Polyurethankunststoff noch nachträglich Vernetzungs- bzw. Polymerisationsreaktionen ausgeführt werden sollen. Häufig verwendet man in diesen Fällen als Komponente B des erfindungsgemässen Verfahrens zumindest anteilsweise Polyhydroxylverbindungen mit copolymerisierbaren Gruppen (beispielsweise ungesättigte Polyester oder Hydroxylgruppen aufweisende Polybutadiene). Es ist aber auch möglich, den fertigen Polyurethankunststoff nachträglich in einem polymerisierbaren Monomeren wie z.B. Acrylnitril, Styrol, Butadien, Neopren, Acrylsäureester, Methacrylsäureester, Vinylchlorid oder Vinylacetat quellen zu lassen und in an sich bekannter Weise mittels eines Radikalinitiators die Polymerisationsreaktion auszulösen.

Die sehr fein zerkleinerten NCO-haltigen oder NCO-freien TDI-Rückstandsschlacken können auch – beispielsweise in chlorierten Kohlenwasserstoffen suspendiert – durch Umsetzung mit Schwefeltrioxid oder Chlorsulfonsäure mit anschliessender Verseifung in hydrophile aromatische polysulfonsaure Derivate überführt werden, wobei die Sulfonsäuregruppen teilweise an die vorhandenen Carbodiimidgruppen Additionsreaktionen eingehen.

Mit Aminen, Ammoniak oder Alkali entstehen die entsprechenden arylsulfonsauren Salze. Wurden zuvor in das Rückstandspulver, mittels der oben beschriebenen Reaktionen, Verbindungen mit tertiärem Stickstoff eingeführt, dann können die sulfonsauren TDI-Rückstandspulver amphothere Systeme ausbilden, bei denen sich sowohl die positive als auch die negative Ladung im gleichen Molekül befindet. In vielen Fällen kann man auch getrennt hergestellte anionische und kationische TDI-Rückstandspulver in einem beliebigen Ionenäquivalentverhältnis mischen und beispielsweise als Ionenaustauscher einsetzen.

Es ist erfindungsgemäss auch möglich, die TDI-Rückstandspulver zu einem beliebigen Zeitpunkt mit pulverförmiger polymerer Blausäure (sogenannten Azulminsäuren) zu vermischen. Azulminsäuren weisen ebenfalls reaktive Gruppierungen (insbesondere Aminogruppen) auf, welche sowohl mit den additionsfähigen Gruppen des TDI-Rückstands (z.B. NCO- und Carbodiimidgruppen) als auch mit den bei der Rückstands-Aufarbeitung gegebenenfalls mitverwendeten Modifizierungsmitteln (z.B. Carbonylverbindungen) reagieren können. Verfahren zur Herstellung von Azulminsäuren sowie ihre Stabilisierung gegenüber Blausäureabspaltung werden z.B. in Houben-Weyl, Methoden der Organ. Chemie (1952), Band 8, Seite 261, in Angew.Chem. 72 (1960), Seite 379–384, den DE-Patentschriften 662 338 und 949 600 sowie den DE-Offenlegungsschriften 2 806 019 und 2 806 020 beschrieben.

Alle beschriebenen Modifizierungsreaktionen an dem erfindungsgemäss einzusetzenden pulverisierten TDI-Destillationsrückstand können vor dessen Verwendung im erfindungsgemässen Verfahren ausgeführt werden. Es ist aber auch möglich, diese Modifizierungsreaktionen (beispielsweise Kondensationsreaktionen mit Carbonylverbindungen sowie gegebenenfalls zur Aminoplastbildung geeigneten Stoffen oder auch Polymerisationsreaktionen) parallel zum erfindungsgemässen Verfahren, d.h. simultan mit der Polyisocyanat-Polyadditionsreaktion, ablaufen zu lassen.

Im allgemeinen werden die gegebenenfalls chemisch modifizierten TDI-Rückstandspulver erfindungsgemäss in einer Menge von mehr als 2 Gew.-%, bevorzugt 5–60 Gew.-%, besonders bevorzugt 10–40 Gew.-%, bezogen auf Summe der Komponenten A, B und C, eingesetzt. Sie bewirken in den meisten Fällen eine so grosse Erhöhung der Härte der Polyurethan-Endprodukte unter gleichzeitiger starker Erhöhung der Zugfestigkeit, dass häufig sogar auf die übliche Mitverwendung von niedermolekularen Kettenverlängerungsmitteln ganz oder wenigstens teilweise verzichtet werden kann.

Beim erfindungsgemässen Verfahren werden die Reaktionskomponenten A, B und C nach dem an sich bekannten Einstufenverfahren, dem Präpolymerverfahren oder dem Semipräpolymerverfahren zur Umsetzung gebracht, wobei man sich oft maschineller Einrichtungen bedient, z.B. solcher, die in der US-Patentschrift 2 764 565 beschrieben werden. Einzelheiten über Verarbeitungseinrichtungen, die auch erfindungsgemäss in Frage kommen, werden im Kunststoff-Handbuch, Band VII, herausgegeben von Vieweg und Höchtlen, Carl-Hanser-Verlag, München 1966, z.B. auf den Seiten 121 bis 205 beschrieben. Erfindungsgemäss ist jedoch auch die Herstellung von Polyisocyanuratkunststoffen (aus den Komponenten A und C) möglich.

Bei der Schaumstoffherstellung kann erfindungsgemäss die Verschäumung auch in geschlossenen Formen durchgeführt werden. Dabei wird das Reaktionsgemisch in eine Form eingetragen. Als Formmaterial kommt Metall, z.B. Aluminium oder Kunststoff, z.B. Epoxidharz, in Frage. In der Form schäumt das schaumfähige Reaktionsgemisch auf und bildet den Formkörper. Die Formverschäumung kann dabei so durchgeführt werden, dass das Formteil an seiner Oberfläche Zellstruktur aufweist, sie kann aber auch so durchgeführt werden, dass das Formteil eine kompakte Haut und einen zelligen Kern aufweist. Erfindungsgemäss kann man in diesem Zusammenhang so vorgehen, dass man in die Form so viel schäumfähiges Reaktionsgemisch einträgt, dass der gebildete Schaumstoff die Form gerade ausfüllt. Man kann aber auch so arbeiten, dass man mehr schäumfähiges Reaktionsgemisch in die Form einträgt, als zur Ausfüllung des Forminneren mit Schaumstoff notwendig ist. Im letztgenannten Fall wird somit unter «overcharging» gearbeitet; eine derartige Verfahrensweise ist z.B. aus den US-Patentschriften 3 178 490 und 3 182 104 bekannt.

Bei der Formverschäumung werden vielfach an sich bekannte «äussere Trennmittel», wie Siliconöle, mitverwendet. Man kann aber auch sogenannte «innere Trennmittel», gegebenenfalls im Gemisch mit äusseren Trennmitteln, verwenden, wie sie z.B. aus den DE-Offenlegungsschriften 2 121 670 und 2 307 589 bekanntgeworden sind.

Erfindungsgemäss lassen sich auch kalthärtende Schaumstoffe herstellen (vgl. GB-Patentschrift 1 162 517, DE-Offenlegungsschrift 2 153 086).

Selbstverständlich können aber auch Schaumstoffe durch Blockverschäumung oder nach dem an sich bekannten Doppeltransportbandverfahren hergestellt werden.

Von besonderem Interesse für das erfindungsgemässe Verfahren sind mit den oben genannten Glykolen modifizierte TDI-Rückstandspulver, die nach der Modifizierung freie Hydroxylgruppen aufweisen. Durch Reaktion mit Polyisocyanaten lassen sich hieraus rieselfähige, lagerstabile Pulver herstellen, welche überraschenderweise thermoplastischen Charakter aufweisen und unter Einwirkung von Hitze und Druck (vorzugsweise 150–230 °C und 4,9–98 bar zu Formkörpern verpresst werden können.

Gemäss einer besonderen Variante der vorliegenden Erfindung werden die TDI-Rückstandspulver als reaktive Füllstoffe und gleichzeitig Bindemittel bei der Herstellung von Spanplatten durch Bindung oder Imprägnierung lignocellulosehaltiger Rohstoffe mittels Polyisocyanaten eingesetzt.

Die Herstellung von Platten oder Formteilen in Heisspressen durch Bindung von lignocellulosehaltigen Fasern, Spänen oder Lagen ist bekannt. Als Bindemittel wurden hierfür bisher meist Kondensationsprodukte des Formaldehyds mit Harnstoff, Melamin oder Phenol bevorzugt. Die so hergestellten lignocellulosehaltigen Werkstoffe sind aber hinsichtlich ihrer Dauerfestigkeit und ihres Verhaltens bei Feuchtigkeitseinwirkung unter Bedingungen, welchen sie insbesondere bei ihrer Verwendung im Bauwesen unterworfen sind, nicht befriedigend. Um die Stabilität und das Feuchteverhalten der Produkte zu verbessern, sowie zwecks Erhöhung der mechanischen Festigkeiten, wurde in diesem Zusammenhang auch die Verwendung von Polyisocyanaten als Bindemittel und/oder Imprägniermittel vorgeschlagen. Neben qualitätsverbessernden Eigenschaften besitzen Polyisocyanate als Bindemittel, wie es die DE-A-2 109 686 offenbart, weitreichende verfahrenstechnische Vorteile. Als Bindemittel kommen alle die obengenannten Polyisocyanate in Frage, vorzugsweise jedoch gemäss DE-A-2 711 858 rohes Diphenylmethandiisocyanat, insbesondere ein Produkt mit einer Viskosität bei 25 °C von 50 bis 600 mPas und einem NCO-Gehalt zwischen 28 und 32 Gew.-%. welches 35 bis 70 Gew.-% an Diisocyanatodiphenylmethanen, davon ca. 1 bis 8 Gew.-% des 2,4'-Isomeren und 0 bis 2 Gew.-% des 2,2'-Isomeren, enthält.

Wie schon erwähnt, ist es bekannt, dass Polyisocyanate für die Herstellung von Spanplatten bzw. Formteilen auf Basis lignocellulosehaltiger Rohstoffe infolge der grundsätzlich anderen Bindungsart wesentliche Vorteile gegenüber den bisher üblichen Bindemittelharzen besitzen.

Da es sich um wasserfreie Bindemittel handelt, muss in der Heisspresse nicht soviel Wasser verdampft werden, was zusammen mit der hohen Reaktivität der Polyisocyanate sehr kurze Presszeiten erlaubt. Auch das sonst erforderliche starke Trocknen der Späne wird überflüssig und daher das Verfahren kostengünstiger. Bei der Bindung mit Polyisocyanaten wirken sich auch staubförmige Anteile des lignocellulosehaltigen Rohstoffes nicht störend aus, was zu einer besseren Rohstoffausnutzung führt und die Gefahr von Betriebsstörungen während der Spanplattenherstellung vermindert. Es treten auch keine Abwasserprobleme auf, da in geschlossenem System gearbeitet wird. Bei gleicher Bindemittelmenge werden die Biege- und Querzugfestigkeiten der Werkstoffe erhöht und die Quellbarkeit bei Feuchtigkeits- bzw. Wassereinwirkung vermindert. Die mit Polyisocyanaten mögliche Bindung ansonst schwer verleimbarer landwirtschaftlicher Abfallstoffe wie Stroh, Reisschalen, Alfagras etc. trägt darüber hinaus weltweit zur Verminderung von Rohstoffversorgungs- und Umweltschutzproblemen bei.

Besonders das gravierende Problem der Belästigung und Gesundheitsbeeinträchtigung durch das aus mit Harnstoff-Formaldehyd- oder (gegebenenfalls modifizierten) Melamin/Harnstoff-Formaldehyd-Harzen gebundenen Spanplatten entweichende Formaldehydgas wird durch Einsatz von Polyisocyanaten vermindert bzw. ausgeschaltet.

Alle diese Vorteile von Polyisocyanaten als Bindemittel für lignocellulosehaltige Materialien konnten bisher in grosstechnischem Umfang nur beschränkt genutzt werden, da sich mit den handelsüblichen Polyisocyanaten zwar in vieler Hinsicht befriedigende Ergebnisse erzielen lassen, diese Polyisocyanate jedoch im Vergleich zu Phenol/Formaldehyd- und Harnstoff/Formaldehyd-Harzen im Preis häufig wesentlich höher liegen. Ersetzt man nun erfindungsgemäss einen Teil des erforderlichen Polyisocyanats durch die infolge ihrer zahlreichen reaktiven Gruppen ebenfalls als Bindemittel wirkenden TDI-Rückstandspulver, so erhält man nicht nur Werkstoffe, welche den mit konventionellen Polyisocyanaten als Bindemittel erhaltenen Spanplatten bzw. Formkörpern in vieler Hinsicht überlegen sind, sondern sie lassen sich auch wegen der Mitverwendung des bisher praktisch wertlosen TDI-Destillationsrückstands besonders ökonomisch herstellen. Überraschenderweise wird durch die Mitverwendung des TDI-Rückstandspulvers auch die Flammbeständigkeit der Platten erheblich verbessert.

Geeignete lignocellulosehaltige Rohstoffe, welche erfindungsgemäss mit einer Mischung aus flüssigem Polyisocyanat und gegebenenfalls chemisch modifiziertem TDI-Rückstandspulver gebunden werden können, sind beispielsweise Holz, Rinde, Kork, Bagasse, Stroh, Flachs, Bambus, Alfagras, Reisschalen, Sisal- und Kokosfasern. Das Material kann dabei in Form von Granulaten, Spänen, Fasern oder Mehl vorliegen und einen Wassergehalt von 0 bis 35 Gew.-%, vorzugsweise von 5 bis 25 Gew.-%, aufweisen. Es wird – bezogen auf Gesamtgewicht des Formkörpers – mit ca. 1 bis 70 Gew.-%, vorzugsweise 1,5 bis 8 Gew.-%, an Polyisocyanat sowie 2–60 Gew.-%, bevorzugt 5–40 Gew.-%. besonders bevorzugt 10–30 Gew.-%, an feinteiliger, gegebenenfalls chemisch modifizierter TDI-Rückstandsschlacke (in beliebiger Reihenfolge) versetzt und – im allgemeinen unter Einwirkung von Druck und Hitze – zu Platten oder Formkörpern verpresst.

In der selben Weise können auch mehrlagige Platten oder Formteile aus Furnieren, Papieren oder Geweben hergestellt werden. Auch mehrschichtige Platten oder Formteile aus Furnieren und Streifen-, Stab- oder Stäbchenmittellagen, sogenannte Tischlerplatten, können erfindungsgemäss hergestellt werden, indem man die Furniere wie oben beschrieben mit einem Polyisocyanat und dem TDI-Rückstandspulver behandelt und anschliessend mit den Mittellagen – in der Regel bei erhöhter Temperatur und erhöhtem Druck – verpresst. Vorzugsweise werden dabei Temperaturen von 100 bis 250 °C, besonders bevorzugt 130 bis 200 °C, eingehalten. Der Anfangspressdruck liegt vorzugsweise zwischen 5 und 150 bar; im Laufe des Pressvorganges fällt dann der Druck meist bis gegen 0 ab.

Erfindungsgemäss können die Bindemittelkombinationen (flüssiges Polyisocyanat einerseits; pulverförmige TDI-Rückstandsschlacke andererseits) auch in Kombination mit Polyhydroxylverbindungen, wie sie aus der Polyurethanchemie an sich bekannt sind, in einem NCO/OH-Verhältnis zwischen 1:2 und 10:1, vorzugsweise 1,5:1 bis 1:1, eingesetzt werden.

Dabei ist es aus Gründen der Lagerstabilität vorteilhaft, die Kombination aus feinteiligem TDI-Rückstand und Polyol in Form eines stabilen NCO-Präpolymeren mit dem flüssigen Polyisocyanat zu verwenden.

Es ist aber auch möglich, die einzelnen Komponenten getrennt oder als reaktives Gemisch einzusetzen. Vorzugsweise wird erfindungsgemäss die Polyhydroxylverbindung mit dem TDI-Rückstandspulver zu einer lagerstabilen Suspension vorvermischt. Es ist auch möglich, an sich bekannte Treibmittel in einer Menge von ca. 0,5 bis 30 Gew.-%, bezogen auf Binde- oder Imprägniermittel, und/oder andere die Schaumbildung oder die chemische Reaktion zwischen Polyisocyanaten, lignocellulosehaltigem Material und gegebenenfalls Polyhydroxylverbindungen beeinflussende Additive wie Stabilisatoren, Katalysatoren und Aktivatoren in einer Menge von 0,05 bis 10 Gew.-%, bezogen auf Binde- bzw. Imprägniermittel, zuzusetzen. Alle diese bei der Herstellung von lignocellulosehaltigen Formkörpern gegebenenfalls mitzuverwendenden Ausgangsmaterialien sind oben im Zusammenhang mit der Herstellung von Polyurethankunststoffen eingehend beschrieben.

Die erfindungsgemäss bei der Herstellung von Platten oder Formteilen aus lignocellulosehaltigem Material zu verwendenden Bindemittelkombinationen (flüssiges Polyisocyanat; feinteilige TDI-Rückstandsschlacke) können auch mit den in der Holzwerkstoffindustrie bisher überwiegend eingesetzten wässrigen Lösungen von Kondensationsprodukten aus Formaldehyd mit Harnstoff und/oder Melamin und/oder Phenol kombiniert werden, aber auch mit anderen, bisher weniger üblichen Binde- und Imprägniermitteln, wie z.B. Sulfitablauge oder Tannin, wobei ein Mischungsverhältnis der erfindungsgemässen mit diesen zusätzlichen Bindemitteln zwischen 1:10 und 10:1, vorzugsweise zwischen 1:5 und 5:1, eingehalten werden kann und wobei man die erfindungsgemässen und die zusätzlichen Bindemittel entweder separat oder auch in Mischung einsetzen kann.

Besonders vorteilhaft sind derartige Kombinationen bei der Herstellung von mehrschichtigen Platten mit speziellen Eigenschaften. Man kann z.B. die äusseren Schichten mit konventionellen Klebstoffen (allein oder gemeinsam mit den Polyisocyanatgemischen) und eine oder mehrere innere Schichten mit den erfindungsgemäss zu verwendenden Kombinationen aus flüssigem Polyisocyanat und pulverförmigem TDI-Rückstand (allein oder gemeinsam mit konventionellen Klebstoffen) versetzen und anschliessend miteinander verpressen.

Infolge ihrer hervorragenden mechanischen Eigenschaften und wegen der Verringerung der Brennbarkeit eignen sich die erfindungsgemäss hergestellten Platten oder Formteile auf Basis von lignocellulosehaltigen Rohstoffen vor allem für eine Verwendung im Bauwesen. Um den Platten oder Formteilen die hierfür im allgemeinen erforderliche Beständigkeit gegen Pilzbefall, Insektenfrass oder Feuereinwirkung zu verleihen, kann man den Bindemitteln die handelsüblichen organischen oder anorganischen Schutzmittel, in reiner Form oder als Lösung in einer Menge von ca. 0,05 bis 30 Gew.-%, vorzugsweise 0,5 bis 20 Gew.-%, bezogen auf lignocellulosehaltige Rohstoffe, zusetzen. Als Lösungsmittel kommen in Frage: Wasser oder organische Lösungsmittel, z.B. Rückstandsöle aus der Erdölaufarbeitung, Chlorkohlenwasserstoffe u.a. Die Verleimungsqualität wird hierdurch im allgemeinen nicht beeinträchtigt. Im Gegensatz zu Phenol/Formaldehyd-Harz-verleimten Platten treten bei den erfindungsgemäss hergestellten Werkstoffen dabei vorteilhafterweise weder Salzausblühungen noch «Ausbluten» ein.

Bedingt durch die hohe Klebkraft der erfindungsgemäss einzusetzenden Bindemittel neigen die hiermit imprägnierten bzw. gebundenen Formkörper dazu, an den Oberflächen der heissen Pressen oder Formen zu haften. Dies kann durch Trennmittel, welche man dem Bindemittel zusetzt, vermieden werden. Eine andere Lösung besteht darin, die Trennmittel in reiner Form oder als Lösung auf die mit den Presslingen in Berührung kommenden metallischen Oberflächen oder die Formlingsoberfläche aufzubringen. Als Trennmittel kommen hierbei alle bisher zu diesem Zweck vorgeschlagenen Substanzen in Frage. Bevorzugt sind jedoch gemäss DE-OS-2 325 926 Verbindungen, welche bei Isocyanaten eine Isocyanuratbildung katalysieren, beispielsweise Phenol-Mannichbasen, Derivate des Hexahydrotriazins oder Alkalisalze von Carbonsäuren. Wie schon mehrfach erwähnt, können mit den erfindungsgemäss zu verwendenden Bindemittelkombinationen im Vergleich zu herkömmlichen Bindemitteln auf Basis von Phenol/Formaldehyd- oder Harnstoff/Formaldehyd-Harzen bei der Spanplattenherstellung wesentliche Verbesserungen, sowohl im Hinblick auf die mechanischen Eigenschaften als auch in verfahrenstechnischer Hinsicht, erzielt werden. So ist es im Falle von Holzspanplatten möglich, entweder bei gleicher Bindemittelmenge wie bei Phenol/Formaldehyd- bzw. Harnstoff/Formaldehyd-Harzen eine um 30 bis 50% erhöhte Biegesteifigkeit (neben einer Verbesserung anderer mechanischer Eigenschaften) oder aber bei einer um 25 bis 70% erniedrigten Bindemittelkonzentration ein gleiches mechanisches Eigenschaftsbild zu erreichen.

In einer weiteren besonderen Ausführungsform des erfindungsgemässen Verfahrens kann man auch zellige Kunststoffe aus zerkleinerten Kunststoffen, bevorzugt Abfällen von Polyurethanhart- oder Weichschaum und (bevorzugt modifiziertem) TDI-Rückstand herstellen, indem man die Mischungen bei Temperaturen von vorzugsweise

über 150 °C, besonders bevorzugt über 170 °C, unter Druckanwendung verpresst. Gegebenenfalls können als weitere Bindemittel die oben bei der Verpressung lignocellulosehaltiger Rohstoffe beschriebenen Produkte mitverwendet werden. Bei der Verwendung von thermoplastischen PUR-Schäumen erhält man auf diese Weise bei entsprechend hohen Temperaturen (170–210 °C) unter Druck und Einstellung eines Raumgewichtes von ca. 1.250–1.300 g/l homogene Pressteile.

In allen beschriebenen Varianten des erfindungsgemässen Verfahrens können die TDI-Rückstandspulver auch in beliebigen Mengenverhältnissen, z.B. 90:10 bis 10:90, zusammen mit Azulminsäuren in pulverisierter Form eingesetzt werden.

Die folgenden Beispiele erläutern das erfindungsgemässe Verfahren. Wenn nicht anders vermerkt, sind Mengenangaben als Gewichtsteile bzw. Gewichtsprozente zu verstehen.

In den Beispielen wurden die folgenden denaturierten TDI-Rückstände verwendet:

TDI-Rückstand I:

Aus der Produktion von monomerem Toluylendiisocyanat im 2,4-/2,6-Isomerenverhältnis 80:20; Korngrösse: <10 µm (50 Gew.-% <4 µm); NCO-Gehalt: 9,9%.

TDI-Rückstand II:

Aus der Produktion von monomerem Toluylendiisocyanat mit einem 2,4-/2,6-Isomerenverhältnis von 65:35; Korngrösse: <20 µm, (50% <12 µm); NCO-Gehalt: 6,9%.

Herstellung der TDI-Rückstände I und II:

Der bei der Destillation des Toluylendiisocyanats im Sumpf verbleibende Phosgenierungsrückstand (ca. 10% der theoretischen Monomerenausbeute) wird als sehr zähe Flüssigkeit ca. 150 bis 180 °C heiss in einen Ausrührkessel abgelassen, in welchem mindestens die doppelte Menge Wasser vorgelegt wurde. Ein grosser Teil der freien Isocyanatgruppen des Destillationsrückstandes reagiert hierbei unter Kohlendioxidabspaltung und Polyharnstoffbildung. Es besteht bei diesem Denaturierungsprozess unter starker Erwärmung des Wassers eine grobteilige, sehr unregelmässig geformte, poröse Rückstandsschlacke, von der man in einer Mulde das Wasser ablaufen lässt, bis der Wassergehalt unter 10 Gew.-%, vorteilhafter für die anschliessende Vorzerkleinerung in einer Hammermühle unter 5 Gew.-%, gesunken ist. Je nach Korngrösse nimmt der NCO-Gehalt der mit Wasser benetzten, denaturierten Rückstandsschlacke bei Raumtemperatur innerhalb von Tagen bis Wochen allmählich ab. Diese Verringerung des Gehaltes an freien Isocyanatgruppen wird unterbunden, indem man die in einer Hammermühle auf unter 3 mm Korngrösse vorzerkleinerte, denaturierte TDI-Rückstandsschlacke bei Temperaturen unter 50 °C in einem Umluftschrank trocknet, bis der Wassergehalt unter 0,2 Gew.-% gesunken ist, und unter Luftabschluss lagert. Die Feinvermahlung erfolgt in einem Durchgang mit Hilfe einer Luftstrahlmühle.

Der Gehalt des Rückstandspulvers an freien Isocyanatgruppen wurde an den feingemahlenen Proben in Aceton bei 50 °C bestimmt.

**Beispiel 1**

Herstellung eines homogenen Polyurethanelastomeren

Rezeptur:

128,5 Teile TDI-Rückstand I

300 Teile eines Polyesters aus 1,6-Hexandiol, 2,2-Dimethyl-propandiol-(1,3) im Molverhältnis 22:12 und Adipinsäure mit einer OH-Zahl von 62 und einer Säurezahl von 1 («Polyester 1»

46,8 Teile 4,4'-Diisocyanatodiphenylmethan.

In einer Rührapparatur wird der Polyester 1 bei Raumtemperatur vorgelegt, das TDI-Rückstandspulver I eingerührt und anschliessend das Gemisch auf 80 °C erwärmt. Danach gibt man das Diphenylmethandiisocyanat zu und rührt im Wasserstrahlvakuum 5 Minuten nach. Das zähflüssige Reaktionsgemisch wird in eine 3 mm hohe Stahlform gegossen und 24 Stunden bei 100 °C ausgeheizt.

**Beispiel 2**

Man arbeitet wie in Beispiel 1 beschrieben, lässt jedoch die freien Isocyanatgruppen des TDI-Rückstands im Polyester 1 ca. 3 bis 4 Stunden bei 90 bis 100 °C reagieren, bis der NCO-Gehalt unter 0,2% gesunken ist. Erst dann wird das Diphenylmethandiisocyanat bei 80 °C im Wasserstrahlvakuum eingerührt.

Vergleichsversuch:

300 Teile Polyester 1 und

49 Teile 4,4'-Diisocyanatodiphenylmethan

werden (ohne Zusatz von TDI-Rückstandspulver) unter den in Beispiel 1 angegebenen Bedingungen vermischt und das Reaktionsgemisch in einer Stahlform ausgeheizt.

Die mechanischen Eigenschaften der gemäss Beispiel 1 und 2 bzw. gemäss Vergleichsversuch erhaltenen Elastomeren sind in der folgenden Tabelle zusammengestellt:

**Tabelle 1**

| Beispiel | 1 | 2 | Vergleich |
|---|---|---|---|
| Reissfestikeit [MPa] | 4,8 | 7,5 | 0,6 |
| Reissdehnung [%] | 1050 | 1190 | 1400 |
| Weiterreisswiderstand [N/cm] | 130 | 175 | 78 |
| Shore-Härte A | 56 | 61 | 42 |

Die nach den Beispielen 1 und 2 hergestellten Polyurethanelastomeren sind leicht entformbar und haben einen trockenen Griff. Das im Vergleichsbeispiel hergestellte Polyurethan ist hingegen etwas klebrig und deshalb schwer entformbar.

**Beispiel 3**

Lösungsmittelfreie Klebstoff- oder Fugenvergussmasse

Rezeptur:
100 Teile TDI-Rückstand II
150 Teile Rizinusöl (OH-Zahl 165)
80 Teile technisches Diphenylmethandiisocyanat (NCO-Gehalt: 30%).

In eine frisch hergestellte Paste aus dem TDI-Rückstand und dem technischen Diphenylmethandiisocyanat wird das Rizinusöl bei Raumtemperatur unter intensivem Rühren eingemischt. Das Reaktionsgemisch wird innerhalb von 30 bis 45 Minuten als Klebstoff- oder Fugenvergussmasse eingesetzt. Der TDI-Rückstand bewirkt eine beträchtliche Erhöhung der Scherfestigkeit und Wärmestandfestigkeit des ausreagierten Polyurethans im Vergleich zu einer Parallelprobe ohne TDI-Rückstandspulver, ohne dass die Flexibilität des ausreagierten Kunststoffs beeinträchtigt wird.

**Beispiel 4**

Herstellung eines Polyurethan-Weichschaums

Unter intensivem Rühren wird bei Raumtemperatur eine Suspension aus den folgenden Komponenten hergestellt:

80 Teile eines auf Trimethylpolpropan gestarteten Polyäthers aus Propylenoxid und Äthylenoxid (OH-Zahl: 34; ca. 80 Mol-% primäre OH-Gruppen),
20 Teile TDI-Rückstand I,
3 Teile Wasser,
0,2 Teile Triäthylendiamin,
0,3 Teile 2-Dimethylaminoäthanol,
0,8 Teile eines handelsüblichen Polysiloxan-Schaumstabilisators (OS 15 der Bayer AG) und
0,22 Teile Zinn-(II)-octoat.

In diese Suspension werden
36,1 Teile Toluylendiisocyanat (2,4-/2,6-Isomerenverhältnis: 72:28) eingerührt.

Nach 10 Sekunden wird das Reaktionsgemisch cremeartig. Die Steigzeit des Schaumes beträgt 80 Sekunden, seine Abbindezeit 140 Sekunden. Der ausreagierte Schaumstoff besitzt die folgenden mechanischen Eigenschaften:
Rohdichte (DIN 53420) 33 kg/m³
Zugfestigkeit (DIN 53571) 160 kPa
Bruchdehnung (DIN 53571) 190%
Stauchhärte (DIN 53577) 5,5 kPa

Im Vergleich dazu hat ein ohne Mitverwendung von TDI-Rückstandspulver hergestellter analoger Weichschaumstoff eine Stauchhärte von nur 4,8 kPa. Der erfindungsgemäss hergestellte Schaumstoff weist gegenüber der Vergleichsprobe eine deutlich verminderte Brennbarkeit auf.

**Beispiel 5**

Herstellung eines Polyurethan-Hartschaumstoffes

In eine frisch hergestellte Mischung aus 100 Teilen eines durch Propoxylierung von Saccharose erhaltenen Polyäthers mit einer OH-Zahl von 380 und einem Wassergehalt von 2,1%,
66 Teilen TDI-Rückstand,
0,7 Teilen N,N-Dimethylcyclohexylamin und
40 Teilen Monofluortrichlormethan
werden innerhalb von 10 Sekunden bei Raumtemperatur 38 Teile eines flüssigen, technischen Diphenylmethandiisocyanats (NCO-Gehalt: 30%) eingerührt und das Reaktionsgemisch in eine offene Form gegossen.

Nach 90 Sekunden ist der Schaumstoff abgebunden. Sein Raumgewicht beträgt 24,5 kg/m³.

Der erfindungsgemäss hergestellte, zähe Hartschaumstoff zeichnet sich durch eine deutlich verminderte Brennbarkeit aus. Erhöht man in der Rezeptur den Anteil des TDI-Rückstandspulvers I auf insgesamt 100 Teile, dann erhält man einen Hartschaumstoff, welcher sogar selbstverlöschend ist.

**Beispiele 6 bis 22**

Herstellung von pulverförmigen pressbaren Massen und Pressplatten

1.) Allgemeine Arbeitsvorschrift (Rezepturen vgl. Tabelle 2)

1.1 Diolmodifizierung

In einem liegenden zylindrischen Behälter mit pflugscharähnlichen Mischelementen mit einem Mehrstufen-Messerkopf wird der auf weniger als 3 mm vorzerkleinerte TDI-Rückstand dreidimensional in einem schwachen Stickstoffstrom in eine intensive Bewegung gebracht und auf 70–100 °C erhitzt. Eine weitere Zerkleinerung erfolgt sowohl mit Hilfe des schnellrotierenden Messerkopfes als auch durch gegenseitiges Aneinanderprallen der sehr harten Rückstandspartikel oder durch den Aufprall an die Trommelwand. Während dieser Feinzerkleinerung werden die in der Tabelle angegebenen Mengen der verwendeten Diole unter Druck so eingedüst, dass deren Zerstäubung im schrägen Winkel zu den Messern in das wirbelnde Mischgut erfolgt. Bei einer Reaktionstemperatur von ca. 100 °C reagiert der grösste Teil der im TDI-Rückstandspulver gegebenenfalls noch vorhandenen Isocyanatgruppen je nach Teilchengrösse innerhalb von 30 Min. bis 2 Stunden, wobei eine entsprechende Menge des eingesetzten Diols unter Ausbildung von Urethangruppen und gegebenenfalls von Hydroxylendgruppen enthaltenden Polyurethanverbindungen reagiert. Überschüssiges Diol wird unter den beschriebenen Bedingungen extrem gleichmässig in sehr dünner Schicht auf der Oberfläche des TDI-Rückstandspulvers verteilt. Falls noch Spuren von Feuchtigkeit (bei Verwendung von mit Wasser denaturiertem TDI-Rückstand) vorhanden sind, können die stark hydrophilen Glykole partiell in die oft fein porösen Teilchen eindringen. Auf diese Weise gelingt es, gut rieselfähige, feinteilige und nicht staubende Pulver zu erhalten, die im Falle feiner Partikel bis zu 20 oder gar 40 Gewichtsprozent an bei Raumtemperatur flüssigem Diol adsorbiert enthalten und trotzdem ein trockenes Aussehen besitzen.

1.2 Polyisocyanat-Polyadditionsreaktion

Das mit Diolüberschuss in der ersten Reaktionsstufe modifizierte TDI-Rückstandspulver wird in einer direkt angeschlossenen oder zu einem späteren Zeitpunkt durchführbaren weiteren Reaktion mit den nachfolgend gekennzeichneten, Isocyanatgruppen enthaltenden Verbindungen umgesetzt, indem man das im Mischer vorliegende, ca. 80–110 °C heisse Pulver mit dem auf 80 °C erwärmten, niedrig viskosen Di- oder Polyisocyanat durch Eindüsen bei intensiver Turbulenz gleichmässig benetzt. In exothermer Reaktion findet innerhalb von 20–40 Minuten eine weitgehend quantitative Polyaddition statt. Die Reaktionstemperatur steigt dabei bis ca. 120–140 °C. Durch die rasch rotierenden Mischelemente wird überraschenderweise nicht nur eine Agglomeratbildung vermieden, sondern mit Hilfe des mehrstufigen Messerkopfes eine weitere Zerkleinerung bewirkt. Verzichtet man dagegen auf eine starke Durchmischung des Reaktionsgutes, so erfolgt rasch eine totale Verklumpung, da das Polyisocyanat unter den Reaktionsbedingungen als Bindemittel wirkt.

Das auf mindestens 50 °C abgekühlte, pulverförmige, pressbare Material wird in Polyäthylensäcke abgefüllt und kann zu einem beliebigen Zeitpunkt verpresst werden.

**Tabelle 2**

| Beispiel | TDI-Rückstand | Diolmodifizierung | | | Di- und Polyisocyanatpolyaddition | | |
|---|---|---|---|---|---|---|---|
| | | DG | EGR | PBA | T 80 | D 44 | D 44V |
| 1 | 2 | 3 | 4 | 5 | 6 | 7 | |
| 6 | 86,7 III | 13,3 | – | – | 3,2 | – | 7,8 |
| 7 | 86,7 III | 13,3 | – | – | – | – | 21,0 |
| 8 | 88,0 IV | – | 12,0 | – | – | – | 8,2 |
| 9 | 88,0 IV | – | 12,0 | – | – | – | 11,8 |
| 10 | 83,0 I | 17,0 | – | 20 | – | – 42,7 | – |

Angaben in Gewichtsteilen

Spalte 2:

TDI-Rückstand III = analog zu TDI-Rückstand I, aber Korngrösse 80% <1,4 mm

TDI-Rückstand IV = analog zu TDI-Rückstand, I, aber Korngrösse 85% <0,5 mm

Spalten 3 bis 5:

DG = Diäthylenglykol

EGR = Äthylenglykol-Destillationsrückstand (OH-Zahl: 517), bestehend aus Mono- bis Hexaäthylenglykol (Sumpfprodukt der Äthylenglykol-Produktion)

PBA: Hydroxylendgruppen enthaltender Polyester aus Adipinsäure und 1,4-Butandiol (Mol-Gew.: 2250)

Spalten 6 bis 8:

T 80 = Toluylendiisocyanat (2,4:2,6.– Isomerengemisch im Verhältnis 80:20)

D 44 = reines 4,4-Diphenylmethandiisocyanat

D44V = rohes 4,4'-Diphenylmethandiisocyanat mit ca. 25 Gew.-% Mehrkernanteilen

2.) Verarbeitung zu Pressplatten

2.1. Verpressung der modifizierten TDI-Rückstandspulver

Die nach den Patentbeispielen 6–10 erhaltenen Pulver werden bei 220–230 °C und 50–100 bar 30 Sekunden pro mm Plattendicke zu 4,5 mm dicken Platten verpresst und ohne Abkühlung aus der Presse genommen. Die Wasser abweisenden, chemikalienfesten und witterungsbeständigen, extrem harten Pressplatten besitzen eine Gebrauchstemperatur über 150 °C. Beim Beflammen mit Hilfe eines Sauerstoffgebläses tritt ohne Tropfenbildung bei Gelb- bis Rotglut oberflächlich eine starke Volumenvergrösserung auf. Wird die Gebläseflamme nach 5–10 Minuten entfernt, erfolgt sofort Selbstverlöschung.

Physikalische Eigenschaften der Pressplatten

**Tabelle 3**

| Beispiel | Presspulver von Beispiel | Kugeldruckhärte (DIN 53456) | Biegeversuch (ISO R 178) | | | Zugversuch (DIN 53455) | | |
|---|---|---|---|---|---|---|---|---|
| | | | E-Modul | $\sigma_B$ | $\varepsilon_B$ | E-Modul | $S_R$ | $D_R$ |
| | | (MPa) | (MPa) | (MPa) | (%) | (MPa) | (MPa) | (%) |
| 11 | 6 | 245,3 | 3916 | 36,1 | 0,91 | 4100 | 29,9 | 0,76 |
| 12 | 7 | 290,4 | 4588 | 86,7 | 1,82 | 4900 | 55,1 | 1,20 |
| 13 | 8 | 263,5 | 3913 | 65,0 | 1,68 | 4600 | 59,1 | 1,30 |
| 14 | 9 | 290,0 | 4461 | 103,0 | 2,36 | 4500 | 56,4 | 1,27 |
| 15 | 10 | 180,7 | 2996 | 93,2 | 5,7 | 3400 | 58,1 | 3,75 |

$\sigma_B$ ... Biegefestigkeit
$\varepsilon_B$ ... Bruchdehnung
$S_R$ ... Reissfestigkeit
$D_R$ ... Reissdehnung

**Beispiel 16**

In einer speziellen Ausführungsform wird das nach Beispiel 8 hergestellte, mit Äthylenglykol-Sumpfrückstand und Polyisocyanat D 44 V modifizierte Pulver zusätzlich bei Raumtemperatur mit 3,6 Gew.-% D 44 V und 10 Gew.-Teilen 5 mm langen Glasfasern intensiv vermischt, wobei eine überraschend lagerstabile, pulverförmige Masse entsteht, die direkt oder innerhalb von 3 Monaten bei 230 °C/50 bar verpresst wird.

Kugeldruckhärte H 30: 325 MPa
(Din 53 456)
Biegeversuch: E-Modul 4725 MPa
(ISO R 178)
Biegefestigkeit 145 MPa
Durchbiegung 2,45%
Zugversuch: E-Modul 4810 MPa
(DIN 53 455)
Reissfestigkeit 86,5 MPa
Dehnung 1,85%

**Tabelle 4**

| | | | Deckschicht | | Zwischenschicht | | Kern | |
|---|---|---|---|---|---|---|---|---|
| Beispiel | modifizierter TDI-Rückstand/ Beispiel (Gew.-Teile) | Holz (Gew.-teile) | Mod. TDI-Rückstand (Gew.-%) | Holz (Gew.-%) | Mod.TDI-Rückstand (Gew.-%) | Holz (Gew.-%) | Mod.TDI-Rückstand | Holz (Gew.-%) |
| | 1 | 2 | 3 | 4 | 5 | 6 | 7 | 8 |
| 17 | 40/8 | 60 | 100 | – | – | – | – | 100(8) |
| 18 | 22/8 | 78 | 75 | 25(4) | 17 | 83(5) | – | 100(6) |
| 19 | 40/9 | 60 | 75 | 25)6) | – | – | 17 | 83(6) |
| 20 | 70/9 | 30 | – | – | – | – | – | – |
| 21 | 30/9 | 70 | – | – | – | – | – | – |

Spalten 1,2:
Gesamtmenge des verwendeten TDI-Rückstands bzw. Holzes

Spalten 3, 5, 7:
Anteil des modifizierten TDI-Rückstands in der jeweiligen Schicht

Spalten 4, 6, 8:
Anteil der Nadelholzspäne; in Klammern: %-Gehalt Beleimungsmittel (rohes Diphenylmethandiisocyanat), bezogen auf Holz

2.2 Verpressung mit Holzspänen

Es werden 0,5–1,5 cm lange Späne aus Nadelhölzern mit einem Wassergehalt von 8,5–9,5 Gew.-% verwendet, die unmittelbar vor dem Einsatz mit 1–8 Gew.-% rohem Diphenylmethandiisocyanat mit einem Isocyanatgehalt von 30 Gew.-% benetzt werden.

Aus den in der Tabelle 4 gekennzeichneten Mischungen der verleimten Holzspäne und der erfindungsgemässen Presspulver werden bei Presstemperaturen von 170–210 °C und einem Druck von 30–70 bar und 10–30 Sekunden Presszeit pro mm Plattendicke 10–16 mm dicke Platten in folgender Art hergestellt:

a) Statistische Verteilung der Mischkomponenten (Beispiel 20, 21)

b) Sandwich-Aufbau mit einer Deckschicht ausschliesslich aus modifiziertem TDI-Rückstandspulver und reinem Holzspankern (Beispiel 17)

c) Integral-Spanplatten mit zunehmenden Gehalt an modifiziertem TDI-Rückstand von innen nach aussen (Beispiele 18, 19)

In allen Fällen werden die in der erforderlichen Reihenfolge auf Stahlbleche aufgestreuten Schichten in der Hitze in einem einzigen Pressvorgang zu Platten mit einem Raumgewicht von 750–900 kg/m$^3$ verbunden.

**Beispiel 22**

88 Gew.-Teile TDI-Rückstand IV und 12 Gew.-Teile Äthylenglykol-Destillationsrückstand werden analog zu Beispiel 8 bzw. 9, jedoch zunächst ohne Isocyanatkomponente, in einem Mischer-Reaktor bei Temperaturen bis 120 °C in Pulverform zur Reaktion gebracht und nach dem Auskühlen mit 250 Gew.-Teilen Nadelholzspänen, die unmittelbar vorher mit 25 Gew.-Teilen Polyisocyanat D 44 V beleimt worden waren, intensiv vermischt und bei 190 °C/50 bar zu einer Wasser abweisenden Holzspanplatte verpresst.

Die nach den Patentbeispielen 17–22 (Tab. 4) hergestellten neuartigen Holzspanpressplatten zeichnen sich durch eine wesentliche Verbesserung folgender Eigenschaften aus: verringerte Wasserquellung, erhöhte Biegefestigkeit und Härte, sowie einfachere mechanische Bearbeitung (Sägen, Bohren, Polieren) ohne Gratbildung.

Von besonderem Vorteil ist, dass die mit einem Sauerstoffgebläse beflammten Holzspanplatten innerhalb von 30 Sekunden nach Entfernung der Flamme selbst verlöschen.

**Patentansprüche**

1. Verfahren zur Herstellung von gegebenenfalls zellförmigen Polyurethankunststoffen durch Polyaddition von

A) Polyisocyanaten sowie gegebenenfalls

B) niedermolekularen und/oder höhermolekularen Verbindungen mit gegenüber Isocyanaten reaktiven Wasserstoffatomen, in Gegenwart von

C) organischen Füllstoffen sowie gegebenenfalls

D) Treibmitteln, Katalysatoren und weiteren an sich bekannten Zusatzstoffen,

dadurch gekennzeichnet, dass als Komponente C ein im wesentlichen monomerenfreier, vernetzter, in inerten organischen Lösungsmitteln unlöslicher, nicht unzersetzt schmelzbarer Destillationsrückstand eingesetzt wird, wie er bei der destillativen Entfernung von monomeren Toluylendiisocyanaten aus den rohen Phosgenierungsprodukten von Toluylendiaminen, gegebenenfalls nach dem Einrühren in Wasser, als Schlacke anfällt, welcher zu einer mittleren Teilchengrösse von weniger als 800 µm zerkleinert ist.

2. Verfahren nach Anspruch 1, dadurch gekennzeichnet, dass als Komponente C ein Destillationsrückstand mit einer Teilchengrösse von weniger als 350 µm eingesetzt wird.

3. Verfahren nach Anspruch 1, dadurch gekennzeichnet, dass als Komponente C ein Destillationsrückstand mit einer Teilchengrösse von weniger als 10 µm eingesetzt wird.

4. Verfahren nach Anspruch 1 bis 3, dadurch gekennzeichnet, dass als Komponente C ein Destillationsrückstand eingesetzt wird, welcher durch Reaktion mit Carbonylverbindungen und/oder gegenüber Isocyanatgruppen und/oder Carbodiimidgruppen reaktiven Verbindungen chemisch modifiziert wurde.

5. Verfahren nach Anspruch 4, dadurch gekennzeichnet, dass durch die chemische Modifizierungsreaktion in Komponente C ungesättigte und/oder ionische bzw. zur Salzbildung befähigte Gruppen eingeführt worden sind.

6. Verfahren nach Anspruch 1 bis 5, dadurch gekennzeichnet, dass 2 bis 50 Gew.-% der Komponente C, bezogen auf die Summe der Komponenten A, B und C, eingesetzt werden.

7. Verfahren nach Anspruch 1 bis 6 zur Herstellung von Platten oder Formteilen durch Heissverpressen lignocellulosehaltiger Rohstoffe mit flüssigen Polyisocyanaten als Bindemittel, dadurch gekennzeichnet, dass man als zusätzliches Bindemittel 2 bis 60 Gew.-% eines im wesentlichen monomerenfreien, vernetzten, in inerten organischen Lösungsmitteln unlöslichen, nicht unzersetzt schmelzbaren Destillationsrückstands mitverwendet, wie er bei der destillativen Entfernung von monomeren Toluylendiisocyanaten aus den rohen Phosgenierungsprodukten von Toluylendiaminen, gegebenenfalls nach dem Einrühren in Wasser, als Schlacke anfällt, welcher zu einer mittleren Teilchengrösse von weniger als 50 µm zerkleinert ist und welcher gegebenenfalls durch Reaktion mit Carbonylverbindungen und/oder gegenüber Isocyanatgruppen und/oder Carbodiimidgruppen reaktiven Verbindungen chemisch modifiziert wurde.

8. Verfahren nach Anspruch 1 bis 7, dadurch gekennzeichnet, dass als zusätzlicher organischer Füllstoff pulverisierte Azulminsäuren eingesetzt werden.

**Revendications**

1. Procédé de production de matières plastiques éventuellement cellulaires du type polyuréthanne, par polyaddition

A) de polyisocyanates ainsi que, le cas échéant

B) de composés de plus bas poids moléculaire et/ou de plus haut poids moléculaire présentant des atomes d'hydrogène réactifs envers des isocyanates, en présence

C) de charges organiques, ainsi que, le cas échéant,

D) de porogènes, de catalyseurs et d'autres additifs connus,

caractérisé en ce qu'on utilise comme composant C) un résidu de distillation principalement dépourvu de monomère, réticulé, insoluble dans des solvants organiques inertes, ne fondant pas sans décomposition, tel qu'on en obtient comme déchet dans l'élimination par distillation de diisocyanatotoluènes monomériques des produits bruts de phosgénation de diaminotoluènes, éventuellement après incorporation dans l'eau sous agitation, qui est subdivisé en particules d'une grosseur moyenne de moins de 800 µm.

2. Procédé suivant la revendication 1, caractérisé en ce qu'on utilise comme composant C un résidu de distillation ayant une grosseur de particules de moins de 350 µm.

3. Procédé suivant la revendication 1, caractérisé en ce qu'on utilise comme composant C un résidu de distillation ayant une grosseur de particules de moins de 10 µm.

4. Procédé suivant les revendications 1 à 3, caractérisé en ce qu'on utilise comme composant C un résidu de distillation qui a été modifié chimiquement par réaction avec des composés carbonyliques et/ou avec des composés réactifs envers des groupes isocyanate et/ou des groupes carbodiimide.

5. Procédé suivant la revendication 4, caractérisé en ce que des groupes non saturés et/ou ioniques ou aptes à la formation d'un sel ont été introduits dans le composant C par la réaction de modification chimique.

6. Procédé suivant les revendication 1 à 5, caractérisé en ce qu'on utilise 2 à 50% en poids du composant C par rapport à la somme des composants A, B et C.

7. Procédé suivant les revendications 1 à 6 pour la production de panneaux ou de pièces moulées par compression à chaud de matières premières contenant de la lignocellulose avec des polyisocyanates liquides comme liants, caractérisé en ce qu'on utilise conjointement comme liant additionnel 2 à 60% en poids d'un résidu de distillation principalement dépourvu de monomère, réticulé, insoluble dans des solvants organiques inertes, ne fondant pas sans se décomposer, tel qu'on en obtient comme déchet dans l'élimination par distillation de diisocyanatotoluènes monomériques des produits bruts de phosgénation de diaminotoluènes, éventuellement après incorporation dans l'eau sous agitation, qui est subdivisé à une grosseur moyenne de particules de moins de 50 µm et qui a été modifié chimiquement, le cas échéant par réaction avec des composés carbonyliques et/ou avec des composés réactifs envers des groupes isocyanate et/ou des groupes carbodiimide.

8. Procédé suivant les revendications 1 à 7, caractérisé en ce qu'on utilise comme charge organique additionnelle des acides azulmiques pulvérisés.

**Claims:**

1. A process for the production of optionally cellular polyurethane plastics by the polyaddition of

A) polyisocyanates and, optionally

B) low molecular weight and/or relatively high molecular weight compounds containing isocyanate-reactive hydrogen atoms, in the presence of

C) organic fillers and, optionally,

D) blowing agents, catalysts and other additives known per se,

characterised in that component C is a substantially monomerfree, crosslinked distillation residue which is insoluble in inert organic solvents and which cannot be melted without decomposing, of the type accumulating as slag in the removal of monomeric tolylene diisocyanates by distillation from the crude phosgenation products of tolylene diamines, optionally after stirring into water, which has been size-reduced to a mean particle size of less than 800 µm.

2. A process according to Claim 1, characterised in that a distillation residue having a particle size of less than 350 µm is used as component C.

3. A process according to Claim 1, characterised in that a distillation residue having a particle size of less than 10 µm is used as component C.

4. A process according to Claims 1 to 3, characterised in that a distillation residue which is chemically modified by reaction with carbonyl compounds and/or compounds reactive to isocyanate groups and/or carbodiimide groups is used as component C.

5. A process according to Claim 4, characterised in that unsaturated and/or ionic groups or groups capable of salt formation have been introduced into component C by the chemical modification reaction.

6. A process according to Claims 1 to 5, characterised in that component C is used in a quantity of from 2 to 50% by weight, based on the sum of components A, B and C.

7. A process according to Claim 1 to 6, for the production of boards or mouldings by hot-pressing starting materials containing ligno-cellulose with liquid polyisocyanates as binders, characterised in that a substantially monomer-free crosslinked distillation residue which is insoluble in inert organic solvents and which cannot be melted without decomposing, of the type accumulating as slag in the removal of monomeric tolylene diisocyanates by distillation from the crude phosgenation products of tolylene diamines, optionally after stirring into water, which has been size-reduced to a mean particle size of less than 50 µm and which has optionally been chemically modified by reaction with carbonyl compounds and/or compounds reactive to isocyanate groups and/or carbodiimide groups, is used as an additional binder in a quantity of from 2 to 60% by weight.

8. A process according to Claims 1 to 7, characterised in that powdered alzuminic acids are used as an additional organic filler.